(19) Europäisches Patentamt
European Patent Office
Office européen des brevets

(11) **EP 3 725 407 A1**

(12) **EUROPEAN PATENT APPLICATION**

(43) Date of publication:
**21.10.2020 Bulletin 2020/43**

(51) Int Cl.:
**B01J 23/63** (2006.01)     **B01D 53/94** (2006.01)
**F01N 3/10** (2006.01)      **B01J 35/00** (2006.01)

(21) Application number: **20178997.1**

(22) Date of filing: **13.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2016 JP 2016080594**

(62) Document number(s) of the earlier application(s) in accordance with Art. 76 EPC:
**17782492.7 / 3 444 030**

(71) Applicants:
• **TOYOTA JIDOSHA KABUSHIKI KAISHA TOYOTA-SHI, AICHI-KEN 471-8571 (JP)**
• **CATALER CORPORATION Kakegawa-shi, Shizuoka 437-1492 (JP)**

(72) Inventors:
• **SHIRAKAWA, Shogo Aichi-ken,, 471-8571 (JP)**
• **MIURA, Masahide Aichi-ken,, 471-8571 (JP)**

• **IKAI, Toshihiro Aichi-ken,, 471-8571 (JP)**
• **IIZUKA, Kosuke Shizuoka,, 437-1492 (JP)**
• **NIHASHI, Hiroki Shizuoka,, 437-1492 (JP)**
• **NAITO, Isao Shizuoka,, 437-1492 (JP)**
• **NAGATA, Takahiro Shizuoka,, 437-1492 (JP)**

(74) Representative: **Kuhnen & Wacker Patent- und Rechtsanwaltsbüro PartG mbB Prinz-Ludwig-Straße 40A 85354 Freising (DE)**

Remarks:
This application was filed on 09-06-2020 as a divisional application to the application mentioned under INID code 62.

(54) **EXHAUST GAS CLEANING CATALYST, EXHAUST GAS CLEANING METHOD, AND EXHAUST GAS CLEANING SYSTEM**

(57)     Provided is an exhaust gas cleaning catalyst capable of inhibiting the grain growth of particulates. An exhaust gas cleaning catalyst of the present invention includes composite metal particulates containing Pd and Rh, where the average proportion of the total number of Rh atoms relative to the total number of Pd and Rh atoms is 0.5 atom%, and given an X-ray wavelength of 1.5403 Å, when XRD analysis is carried out under the condition that the diffraction surface is the crystal lattice face of the Pd(111), and diffraction angles $2\theta$ indicating the positions of the diffraction peaks on the diffraction surface are identified, the absolute value of the difference between the theoretical lattice constant B calculated from a formula related to Vegard's law using the identified values, and the actual lattice constant C calculated from a formula related to lattice constants and Bragg's law does not exceed $1.020 \times 10^{-3}$(Å). A smaller absolute value of the difference between the theoretical lattice constant B and the actual lattice constant C is associated with a higher degree to which the Pd and Rh are combined with one another.

FIG. 4

**Description**

FIELD

The present invention relates to an exhaust gas purifying (cleaning) catalyst, an exhaust gas purifying method, and an exhaust gas purification system.

BACKGROUND

An exhaust gas discharged from an internal combustion engine of an automobile, etc., for example, an internal combustion engine such as gasoline engine or diesel engine, contains harmful components such as carbon monoxide (CO), hydrocarbon (HC) and nitrogen oxide (NOx).
Accordingly, an exhaust gas purifying apparatus for decomposing and removing these harmful components is generally provided in an internal combustion engine, and the harmful components are rendered substantially harmless by an exhaust gas purifying catalyst attached to the exhaust gas purifying apparatus.
Conventionally, as an example of such an exhaust gas purifying catalyst, a catalyst in which a fine particle of platinum group element, for example, a fine particle, etc. of palladium (Pd) is supported on a metal oxide support particle, is known.
However, the fine Pd particle exposed to a high-temperature exhaust gas causes sintering, and its catalytic activity may thereby be reduced. Here, "sintering" means a phenomenon where a fine particle undergoes grain growth at a temperature not higher than the melting point of the fine particle.
Considering the possibility for the fine Pd particle to cause sintering, in a conventional exhaust gas purifying catalyst containing fine Pd particles, the amount of the fine Pd particle is excessive, compared with the amount supposed to be necessary in the initial stage.
In addition, production of the platinum group element such as Pd is limited to a small area, and the area of production is unevenly distributed to specific areas such as South Africa and Russia. Accordingly, the platinum group element is a very expensive rare element. Furthermore, the amount of the platinum element used is increasing in association with tightening of automotive emission controls, and depletion of the element is concerned.
Consequently, technologies for reducing the amount of the platinum group element used in the catalyst and avoiding lowering in catalytic activity at high temperatures are being developed.
Incidentally, the composite metal colloid of Patent Document 1 contains a plurality of metal elements. In Patent Document 1, it is stated that the average particle diameter of the composite metal colloid is from 2 to 12 nm and the plurality of metal elements are substantially uniformly distributed within a particle of the composite metal. Patent Document 1 discloses, specifically, a composite metal colloid dispersion in which a palladium chloride solution and a rhodium chloride solution are mixed at 1:1 in terms of molar ratio.

[CITATION LIST]

[PATENT DOCUMENT]

Patent Document 1: Kokai (Japanese Unexamined Patent Publication) No. 2002-102679

SUMMARY

[PROBLEMS TO BE SOLVED BY THE INVENTION]

An object of the present invention is to provide an exhaust gas purifying catalyst capable of suppressing grain growth of a plurality of fine particles.

[MEANS TO SOLVE THE PROBLEMS]

The present inventors have found that the above-described object can be attained by the following means.

<1> An exhaust gas purifying catalyst including a fine composite metal particle containing Pd and Rh, wherein the average ratio of the total number of Rh atoms to the total number of Pd and Rh atoms is 0.5 at% or more and 6.5 at% or less, and,
when diffraction angles $2\theta$ indicative of the positions of diffraction peaks on the diffraction plane are specified by performing XRD analysis under the conditions that the X-ray wavelength is 1.5403 angstrom and the diffraction plane is the crystal lattice plane of Pd (111), the absolute value of the difference between the value of theoretical lattice constant B calculated from the following formula (I) related to Vegard's law and the value of actual lattice constant C calculated from the following formula (II) related to Bragg's law by using the values specified is $1.020 \times 10^{-3}$ (angstrom) or less:

$$B = -8.5459 \times 10^{-2} \times A + 3.890105 \qquad (I)$$

[wherein A is the average ratio of the total number of Rh atoms to the total number of Pd and Rh atoms];

$$C = \lambda \times (h^2 + k^2 + l^2)^{1/2}/(2\sin\theta) \qquad (II)$$

[wherein

λ is the X-ray wavelength,
h, k and 1 are the Miller indices, and
θ is a half of the diffraction angle 2θ].

<2> The exhaust gas purifying catalyst according to item <1>, further including a support particle, wherein the fine composite metal particle is supported on the support particle.

<3> The exhaust gas purifying catalyst according to item <2>, wherein the support particle is a support particle selected from the group consisting of silica, magnesia, zirconia, ceria, alumina, titania, a solid solution thereof, and a combination thereof.

<4> An exhaust gas purifying method, including bringing an exhaust gas containing HC, CO and NOx into contact with the exhaust gas purifying catalyst according to any one of items <1> to <3> in a stoichiometric atmosphere, thereby purifying the exhaust gas through oxidation of HC and CO and reduction of NOx.

<5> An exhaust gas purification system including an internal combustion engine for discharging an exhaust gas, a first exhaust gas purifying catalyst device for treating the exhaust gas, and a second exhaust gas purifying device for further treating the exhaust gas treated in the first exhaust gas purifying catalyst device, wherein;

the first exhaust gas purifying catalyst device includes a substrate, a lower catalyst layer disposed on the substrate, and an upper catalyst layer disposed on the lower catalyst layer and having a surface facing the flow path of the exhaust gas,

the upper catalyst layer contains the fine Pd-Rh composite metal particle described in item <1> in an amount of 0.1 g or more and 1.1 g or less per L of the volume of the substrate, and in the lower and upper catalyst layers, the position having a highest concentration of the fine Pd-Rh composite metal particle is the surface of the upper catalyst layer.

<6> An exhaust gas purification system including an internal combustion engine for discharging an exhaust gas, a first exhaust gas purifying catalyst device for treating the exhaust gas, and a second exhaust gas purifying device for further treating the exhaust gas treated in the first exhaust gas purifying catalyst device, wherein;

the first exhaust gas purifying catalyst device includes a substrate, a lower catalyst layer disposed on the substrate, and an upper catalyst layer disposed on the lower catalyst layer and having a surface facing the flow path of the exhaust gas,

the upper catalyst layer contains the fine Pd-Rh composite metal particle described in item <1> in an amount of 0.1 g or more and 1.2 g or less per L of the volume of the substrate, and in the upper catalyst layer, the concentration of the fine Pd-Rh composite metal particle is substantially uniform in the thickness direction.

<7> An exhaust gas purification system including an internal combustion engine for discharging an exhaust gas, a first exhaust gas purifying catalyst device for treating the exhaust gas, and a second exhaust gas purifying device for further treating the exhaust gas treated in the first exhaust gas purifying catalyst device, wherein;

the first exhaust gas purifying catalyst device includes a substrate, a lower catalyst layer disposed on the substrate, and an upper catalyst layer disposed on the lower catalyst layer and having a surface facing the flow path of the exhaust gas,

the lower catalyst layer contains a ceria-based support particle having supported thereon the fine Pd-Rh composite metal particle described in item<1> in an amount of 75 g or less per L of the volume of the substrate, and in the lower catalyst layer, the concentration of the fine Pd-Rh composite metal particle is substantially uniform in the thickness direction.

<8> The exhaust gas purification system according to item <7>, wherein:

the substrate has an upstream end serving as an inlet portion allowing the exhaust gas to enter and a downstream end serving as an outlet portion allowing the exhaust gas to exit, and

the lower catalyst layer is formed in a length of 80% or less of the total length of the substrate over a region extending from upstream end to downstream end of the substrate.

[EFFECTS OF THE INVENTION]

According to the present invention, an exhaust gas purifying catalyst capable of suppressing grain growth of the fine particles above can be provided.

BRIEF DESCRIPTION OF THE DRAWINGS

[FIG. 1] Fig. 1 is a schematic diagram illustrating one embodiment of the production method of an exhaust gas purifying catalyst.

[FIG. 2] Fig. 2 is a schematic diagram illustrating the relationship between the time t and the temperature °C, regarding a thermal endurance test.

[FIG. 3] Fig. 3 illustrates X-ray diffraction patterns of the exhaust gas purifying catalysts of Examples 1 to 3, Comparative Examples 1 and 2, and Reference Example.

[FIG. 4] Fig. 4 illustrates the relationship between Rh/(Pd+Rh) (at%) and the lattice constant, regarding the exhaust gas purification catalysts of Examples 1 to 3, Comparative Examples 1 and 2, and Reference Example.

[FIG. 5] Fig. 5 illustrates the relationship between Rh/(Pd+Rh) (at%) and the average particle diameter (nm) of fine particles calculated from the Scherrer equation, regarding the exhaust gas purification catalysts of Examples 1 to 3, Comparative Examples 1 and 2, and Reference Example.

[FIG. 6] Fig. 6 illustrates the purification rates (%) of HC and CO at 500°C, regarding the exhaust gas purification catalysts of Examples 1 to 3, Comparative Examples 1 and 2, and Reference Example.

[FIG. 7] Fig. 7(a) is a Transmission Electron Microscope (TEM) image of the exhaust gas purifying catalyst of Comparative Example 1 after thermal endurance test, and Fig. 7(b) is a TEM image of the exhaust gas purifying catalyst of Example 3 after thermal endurance test.

[FIG. 8] Fig. 8 is a schematic diagram of the exhaust gas purification system of the present invention.

[FIG. 9] Fig. 9 is a schematic diagram of the first exhaust gas purifying catalyst device of the exhaust gas purification system of the present invention.

[FIG. 10] Fig. 10 is a diagram illustrating THC purification rate (°C) at 500°C, regarding the exhaust gas purifying catalyst devices of Examples A1, A3 and A7 and Comparative Examples A1, A3 and A7.

[FIG. 11] Fig. 11 is a diagram illustrating the relationship between the amount added (g/L) of Pd on the surface of the upper catalyst layer and the THC purification rate (%) at 500°C, regarding the exhaust gas purifying catalyst devices of Examples A2 to A6 and Comparative Examples A1 to A6.

[FIG. 12] Fig. 12 is a diagram illustrating the relationship between the exhaust gas purifying catalyst devices of Examples B1, B2 and B6 and Comparative Examples B1 to B4 and B8 and the THC 50% purification temperature (°C).

[FIG. 13] Fig. 13 is a diagram illustrating the relationship between the amount added (g/L) of Pd in the upper catalyst layer and the THC 50% purification temperature (°C), regarding the exhaust gas purifying catalyst devices of Examples B2 to B5 and Comparative Examples B1 and B4 to B7.

[FIG. 14] Figs. 14(a) and (b) are diagrams illustrating TEM images photographed after disintegrating the upper catalyst layers of the exhaust gas purifying catalyst devices of Example B2 and Comparative Example B4, respectively.

[FIG. 15] Fig. 15 is a diagram illustrating the oxygen storage amount (g), regarding the exhaust gas purifying catalyst devices of Examples C1, C3 and C6 and Comparative Examples C1 to C3.

[FIG. 16] Fig. 16 is a diagram illustrating the relationship between the amount added (g/L) of LaY-ACZ composite oxide in the lower catalyst layer and the oxygen storage amount (g), regarding the exhaust gas purifying catalyst devices of Examples C2 to C5 and Comparative Example C1.

[FIG. 17] Fig. 17 is a diagram illustrating the relationship between the amount added (g/L) of LaY-ACZ composite oxide in the lower catalyst layer and the NOx 50% purification temperature (°C), regarding the exhaust gas purifying catalyst devices of Examples C2 to C5 and Comparative Example C1.

[FIG. 18] Fig. 18 illustrates an electron probe microanalyzer (EPMA) image of a cross-section of the exhaust gas purifying catalyst device of Example A1.

[FIG. 19] Fig. 19 is a diagram illustrating the relationship between the upper layer supporting rate (%) and the THC purification rate (%) at 500°C, regarding the exhaust gas purifying catalyst devices of Examples A1, A3 and A8.

MODE FOR CARRYING OUT THE INVENTIONS

The embodiments of the present invention are described in detail below. Incidentally, the present invention is not limited to the following embodiments and can be implemented by making various modifications therein within the scope of the gist of the present invention.

«Exhaust Gas Purifying Catalyst»

The exhaust gas purifying catalyst of the present invention includes a fine composite metal particle containing Pd and Rh. Furthermore, in the exhaust gas purifying catalyst of the present invention, the average ratio of the total number of Rh atoms to the total number of Pd and Rh atoms is 0.5 at% or more and 6.5 at% or less.
In the fine composite metal particle contained in the exhaust gas purifying catalyst of the present invention, Rh relatively insusceptible to grain growth and Pd relatively susceptible to grain growth are compounded. Accordingly, the fine composite metal particle containing Pd and Rh has a property of very little grain growth even under high temperature conditions.
In addition, in the composite metal particle, the ratio of Pd to Rh is large. Accordingly, the fine composite metal particle can have a property of very little grain growth while exhibiting an exhaust gas purifying ability inherent in Pd. In other words, the fine composite metal particle can alter the property inherent in Pd of being relatively susceptible to grain growth, while exhibiting an exhaust gas purifying ability inherent in Pd.
Consequently, according to the present invention, an exhaust gas purifying catalyst capable of suppressing grain growth of fine particles can be provided.
The conventional exhaust gas purifying catalyst generally contains an excess amount of fine Pd metal particles so as to compensate for the catalytic activity reduced along with grain growth of fine Pd metal particles. However, in the exhaust gas purifying catalyst of the present invention, such grain growth is suppressed, so that the amount used of an expensive rare metal, particularly, Pd metal, can be decreased. Consequently, according to the present invention, an inexpensive, high-performance and environmentally-friendly exhaust gas purifying catalyst can be provided.
Incidentally, the fine composite metal particle contained in the exhaust gas purifying catalyst of the present invention may be in a state of a part thereof being oxidized depending on the temperature, humidity and atmosphere conditions. It should be understood that even when the fine composite metal particle is in such a state, the exhaust gas purifying catalyst of the present invention can suppress grain growth of a plurality of fine particles while maintaining the exhaust gas purifying ability.
In the following, a plurality of constituent elements contained in the exhaust gas purifying catalyst of the present invention are described in detail.

<Fine Composite Metal Particle>

The fine composite metal particle contains Pd and Rh.
If the average ratio of the total number of Rh atoms to the total number of Pd and Rh atoms is too small, it may be difficult to suppress grain growth of fine composite metal particles. Accordingly, the average ratio of the total number of Rh atoms to the total number of Pd and Rh atoms may be 0.5 at% or more, 1 at% or more, 1.5 at% or more, or 2 at% or more.
If the average ratio of the total number of Rh atoms to the total number of Pd and Rh atoms is too large, compounding, particularly solid solution formation, may not be substantially caused between Pd and Rh. Accordingly, the average ratio of the total number of Rh atoms to the total number of Pd and Rh atoms may be 6.5 at% or less, 6.0 at% or less, 5 at% or less, 4.5 at% or less, or 4 at% or less.
Here, the "fine composite metal particle" as used in the present invention means a material in which at least two kinds of metal elements are at least partially dissolved into solid solution. Accordingly, for example, a fine composite metal particle of Pd and Rh means that Pd and Rh are at least partially dissolved into solid solution and among others, Pd and Rh at least partially form together a solid solution of single crystal structure. More specifically, for example, "fine composite metal particle of Pd and Rh" may have not only a portion in which Pd and Rh are dissolved into solid solution, but also a portion in which Pd and Rh are each present independently.

(Definition of Compounding of Fine Composite Metal Particle)

In the exhaust gas purifying catalyst of the present invention, a plurality of fine composite metal particles having the above-described average ratio (sometimes referred to as "average ratio A") are contained. Compounding of such a plurality of fine composite metal particles is specifically defined as follows:
when diffraction angles 2θ indicative of the positions of diffraction peaks on the diffraction plane are specified by performing XRD analysis under the conditions that the X-ray wavelength is 1.5403 angstrom and the diffraction plane is the crystal lattice plane of Pd (111) and when the absolute value of the difference between the value of theoretical lattice constant B calculated from the following formula (I) related to Vegard's law and the value of actual lattice constant C calculated from the following formula (II) related to Bragg's law by using the values specified is, for example, $1.020 \times 10^{-3}$ (angstrom) or less, $1.000 \times 10^{-3}$ (angstrom) or less, $0.900 \times 10^{-3}$ (angstrom) or less, $0.700 \times 10^{-3}$ (angstrom) or less, $0.688 \times 10^{-3}$ (angstrom) or less, $0.600 \times 10^{-3}$ (angstrom) or less, $0.500 \times 10^{-3}$ (angstrom) or less, $0.400 \times 10^{-3}$ (angstrom) or less, $0.300 \times 10^{-3}$ (angstrom) or less, $0.261 \times 10^{-3}$ (angstrom) or less, or $0.200 \times 10^{-3}$ (angstrom) or less, the form is regarded as "compounding" in the present invention.

$$B = -8.5459 \times 10^{-2} \times A + 3.890105 \qquad \text{(I)}$$

[wherein A is the average ratio A.]

$$C = \lambda \times (h^2 + k^2 + l^2)^{1/2} / (2\sin\theta) \qquad \text{(II)}$$

[wherein,

$\lambda$ is the X-ray wavelength,
h, k and 1 are the Miller indices, and
$\theta$ is a half of the diffraction angle $2\theta$.]

In the present invention, the "Vegard's law" means an empirical rule that a proportional relation is present between the lattice constant (sometimes referred to as theoretical lattice constant) of a material in which two kinds of metal elements are mutually dissolved into solid solution, and the composition ratio of two kinds of metal elements. According to the Vegard's law, this proportional relation can be expressed by the following formula (III):

$$B = B_1 \times Pd/(Pd+Rh) + B_2 \times Rh/(Pd+Rh) \qquad \text{(III)}$$

[wherein,

B is the theoretical lattice constant of a fine composite metal particle in which Pd and Rh are mutually dissolved into solid solution,
$B_1$ is the lattice constant of Pd single crystal,
Pd/(Pd+Rh) is the average ratio of the total number of Pd atoms to the total number of Pd and Rh atoms,
$B_2$ is the lattice constant of Rh single crystal, and
Rh/(Pd+Rh) is the average ratio of the total number of Rh atoms to the total number of Pd and Rh atoms].

When it is taken into account that the lattice constant of Pd single crystal using, as the diffraction plate, the crystal lattice plane with the Miller index (hkl) being (111) is 3.890105 angstrom and the lattice constant of Rh single crystal on the diffraction plane above is 3.804646 angstrom and when formula (III) is converted using the average ratio (A) of the total number of Rh atoms to the total number of Pd and Rh atoms, the following formula (IV) is derived:

$$B = 3.890105 \times (1-A) + 3.804646 \times A \qquad \text{(IV)}$$

That is, formula (IV) is equal to formula (I). Incidentally, note that in formula (I), the calculation is performed by converting the value of A not to at% but to a decimal point.
It should be understood that as the absolute value of the difference between the value of actual lattice constant of a fine composite metal particle having a predetermined average ratio and the value of theoretical lattice constant derived by substituting the predetermined average ratio into formula (I) is smaller, the degree of compounding between Pd and Rh with each other is higher. Incidentally, the degree of compounding should be understood not to be a measure indicating the degree of compounding of every single fine particle related to Pd and Rh in the exhaust gas purifying catalyst but to be a measure determined by averaging degrees of compounding of all fine particles related to Pd and Rh.
Accordingly, when the degree of compounding expressed by the absolute value of the difference between the theoretical lattice constant and the actual lattice constant is high, this indicates that a large number of fine particles are a fine composite metal particle and in every single fine composite metal particle, the proportion of a portion in which Pd and Rh are dissolved into solid solution is high and the proportion of a portion in which Pd and Rh are each present independently is low. On the other hand, when such a degree of compounding is low, this indicates that a small number of fine particles are a fine composite metal particle or a fine composite metal particle itself is substantially not formed. In addition, when the degree of compounding is low and a small number of fine composite metal particles are formed, this indicates that in the fine composite metal particle, the proportion of a portion in which Pd and Rh are dissolved into solid solution is low and the proportion of a portion in which Pd and Rh are each present independently is high.

The value of actual lattice constant of a fine composite metal particle having a predetermined average ratio is derived from formula (II) related to Bragg's law and lattice constant. Furthermore, formula (II) itself is derived by substituting "d" of the following formula (V) related to Bragg's law (first order Bragg reflection: n=1) into "d" of the following formula (VI) related to lattice constant. Here, "d" in the following formulae (V) and (VI) means a lattice spacing, and with respect to the meanings of other constants and variables in these formulae, please refer to formula (II).

$$2d \times \sin\theta = n \times \lambda \qquad (V)$$

$$d = C/(h^2 + k^2 + l^2)^{1/2} \qquad (VI)$$

Incidentally, the positions of diffraction peaks on the diffraction plane are not particularly limited but may be found in the range of diffraction angles $2\theta$ of 40° or more and 42° or less.

The materials and elements constituting the exhaust gas purifying catalyst and the amounts, composition ratio, etc. thereof can be determined by general measurement methods in the catalyst field.

If the particle diameter of the fine composite metal particle is too large, the specific surface area is small and the number of active sites of Pd decreases, as a result, the exhaust gas purifying catalyst may not exhibit sufficient exhaust gas purifying ability.

If the particle diameter of the fine composite metal particle is too small, the exhaust gas purifying catalyst may be deactivated.

Accordingly, the average particle diameter of the plurality of fine composite metal particles may be more than 0 nm, 1 nm or more, or 2 nm or more, and/or may be 50 nm or less, 10 nm or less, 7 nm or less, 5 nm or less, or 3 nm or less.

The catalytic ability can be enhanced by using, as the catalyst component, fine composite metal particles having such a particle diameter.

In the present invention, unless otherwise indicated, the "average particle diameter" is a value calculated from the results of X-ray diffraction (XRD) analysis by using the following Scherrer equation (VII):

$$\tau = K \times \lambda/(\beta \times \cos\theta) \qquad (VII)$$

[wherein,

shape factor: K
X-ray wavelength: $\lambda$
full width at half maximum of peak: $\beta$
Bragg angle: $\theta$
particle diameter of fine particle: $\tau$].

<Support Particle>

The support particle carries the fine composite metal particle.

Examples of the support particle carrying the fine composite metal particle are not particularly limited, and an arbitrary metal oxide used in general as a support particle in the technical filed of exhaust gas purifying catalyst may be used.

Examples of such a support particle include silica ($SiO_2$), magnesia (MgO), zirconia ($ZrO_2$), ceria ($CeO_2$), alumina ($Al_2O_3$), titania ($TiO_2$), a solid solution thereof, and a combination thereof. Examples of the combination thereof include a $ZrO_2$-$CeO_2$ composite oxide support.

An acidic support, for example, silica, has good compatibility with a catalyst metal for reducing NOx. A basic support, for example, magnesia has good compatibility with K or Ba for storing NOx. Zirconia suppresses sintering of other support particles at high temperatures where sintering of other support particles occurs, and when combined with Rh as a catalyst metal, can cause a steam-reforming reaction to efficiently perform production of $H_2$ and reduction of NOx. Ceria has an OSC (Oxygen Storage Capacity) property of storing oxygen in a lean atmosphere and releasing oxygen in a rich atmosphere and accordingly, this support can be suitably used for a three-way catalyst, etc. An acid-base amphoteric support, for example, alumina, has a high specific surface area and therefore, this support can be used for efficiently performing storage and reduction of NOx. Titania can exert an effect of preventing sulfur poisoning of the catalyst metal.

It should be understood that according to the properties of the support particles above, the exhaust gas purifying ability of the exhaust gas purifying catalyst of the present invention may be enhanced by the type, the composition, the combination and ratio thereof, and/or the amount of the support particle selected.

The supporting amount of the fine composite metal particle supported on the support particle is not particularly limited, but generally, for example, per 100 parts by mass of the support particle, the supporting amount may be 0.01 parts by mass or more, 0.10 parts by mass or more, or 1.00 parts by mass or more and/or may be 5.00 parts by mass or less, 3.00 parts by mass or less, or 1.00 parts by mass or less.

Description of the exhaust gas purifying catalyst of the present invention, the following description of the production method of the exhaust gas purifying catalyst, description of the exhaust gas purification system, and the exhaust gas purifying method may be referred to in an interrelated manner.

«Production Method of Exhaust Gas Purifying Catalyst»

The method for producing the exhaust gas purifying catalyst is not particularly limited as long as a fine composite metal particle containing Pd and Rh can be produced. The method may be, for example, a coprecipitation method, a reverse micelle method, or a citrate complex method.

A coprecipitation method as one embodiment of the method for producing the exhaust gas purifying catalyst is described by an example. The coprecipitation method includes stirring and mixing a solution containing Pd ion, Rh ion, and a pH adjuster, thereby preparing a mixed solution. This method optionally includes adding and mixing support particles to the mixed solution, thereby preparing a catalyst precursor slurry. Furthermore, the method optionally includes drying and/or firing the catalyst precursor slurry, thereby preparing an exhaust gas purifying catalyst.

In general, a fine metal particle of nanosize is known to have an electronic energy structure different from that of a fine metal particle of more than macrosize and exhibit electrical·optical properties depending on the particle size. Furthermore, a nanosize fine metal particle having a very large specific surface area generally has high catalytic activity.

As an example of the method for manufacturing such a fine metal particle of nanosize, a so-called co-impregnation method of causing a fine composite metal particle to be supported on a support particle by using a mixed solution containing salts of respective metal elements is generally known.

However, in such a conventional co-impregnation method, it is substantially impossible for a specific combination of Pd and Rh to form a fine composite metal particle in which these metal elements are present together at nano-level.

Although not intended to be bound by theory, this is considered to occur because in the conventional co-impregnation method, Pd and Rh are not mutually compounded due to, for example, repulsion of ions in the solution from each other and a fine Pd particle and an Rh fine particle are precipitated separately.

In contrast thereto, in the method for producing the exhaust gas purifying catalyst, Pd and Rh are compounded in a fine composite metal particle. Although not intended to be bound by any theory, this is considered to be achieved because the value of pH at which Rh forms a hydroxide relative to the actual redox potential of Rh is close to the value of pH at which Pd forms a hydroxide relative to the actual redox potential of Pd and therefore, these are likely to be precipitated at the same time; in the coprecipitation method, a composite hydroxide containing Pd and Rh is formed with the aid of a pH adjuster and in turn, these metal elements are located close to each other; and/or in the coprecipitation method, composite hydroxides are dispersed while maintaining an appropriate size without aggregating to each other by virtue of a dispersion medium. Incidentally, the dispersion medium is an optional component, and the pH adjuster may assume a role as the dispersion medium.

The time for which a solution containing Pd ion, Rh ion and a pH adjustor is mixed is not particularly limited but may be 0.5 hours or more, or 3 hours or more, and/or may be 6 hours or less, or 24 hours or less. This solution may be mixed optionally under heating.

The pH of the solution is preferably basic. The pH of the solution may be from 9 to 12, or from 10 to 11.

The temperature, time and atmosphere at the time of drying the catalyst precursor slurry are not particularly limited but may be, for example, from 80 to 200°C, from 1 to 24 hours, and air atmosphere. The temperature, time and atmosphere at the time of firing the catalyst precursor slurry are not particularly limited but may be from 400 to 1,000°C, from 2 to 4 hours, and air atmosphere.

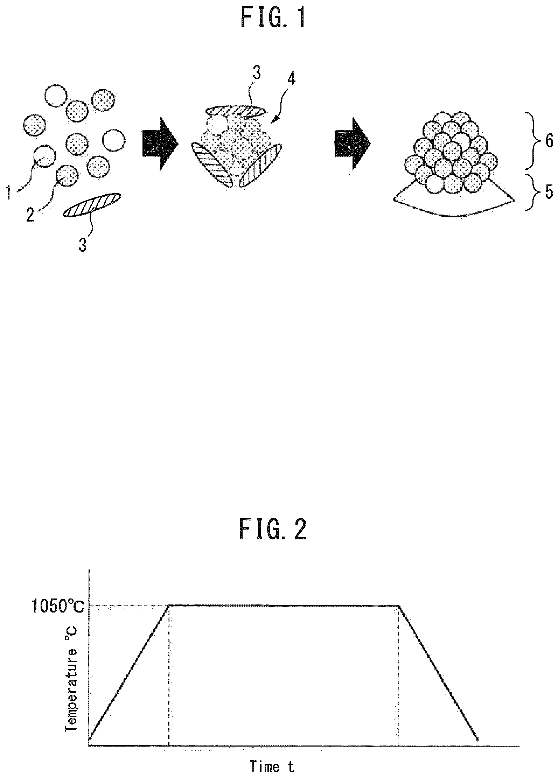

Fig. 1 is a schematic diagram illustrating one embodiment of the production method of the exhaust gas purifying catalyst. In Fig. 1, Rh ion 1, Pd ion 2, and a pH adjustor 3 assuming also the role of dispersant are mixed to produce a composite hydroxide 4, and this is dried and/or fired to produce a fine composite metal particle 6 supported on a support particle 5. The support 5 may be added in any step of the preparation of the exhaust gas purifying catalyst.

<Pd Ion and Rh Ion>

The Pd ion and Rh ion are contained in a solution containing a pH adjustor.

Examples of the raw material of Pd ion include, although not particularly limited, an inorganic salt of Pd, such as nitrate, phosphate and sulfate; an organic acid salt of Pd, such as oxalate and acetate; a halide of Pd, such as fluoride, chloride, bromide and iodide; and a combination thereof.

With respect to the raw material of Rh ion, the description above of the raw material of Pd ion may be referred to.

The concentrations of Pd ion and Rh ion are not particularly limited. As for the concentrations of Pd ion and Rh ion, the total ion concentration thereof is preferably from 0.01 to 0.20 M.

The molar ratio of Pd ion and Rh ion is not particularly limited but may be correlated to the molar ratio of Pd and Rh in the target fine composite metal particle, and examples thereof include a molar ration of 1:99 to 5:95 and a molar ratio of 2:98 to 4:96.

The molar ratio of Pd ion and Rh ion may be correlated to the average ratio of the total number of Rh atoms to the total number of Pd and Rh atoms in the fine composite metal particle of the exhaust gas purifying catalyst of the present invention. In this case, the molar ratio therebetween may be determined by taking into account the measure for reduction of these ions, for example, the redox potential or ease of dissolution into solid solution of respective elements.

<pH Adjustor>

Example of the pH adjustor are not particularly limited, and a known pH adjustor may be employed. The pH adjustor may be, for example, tetramethylammonium hydroxide (TMAH). In addition, the pH adjustor may assume a role as the dispersion medium for preventing aggregation of hydroxides.

<Solvent>

The solvent is optionally contained in the solution containing Pd ion, Rh ion, and a pH adjustor. Examples of the solvent are not particularly limited. Examples of the solvent may be a polar solvent, for example, water and alcohol.

<Others>

Description of the production method of the exhaust gas purifying catalyst, the above-described description of the exhaust gas purifying catalyst of the present invention, the following description of the exhaust gas purification system, description of the exhaust gas purifying method, and the production method of the exhaust gas purifying catalyst device may be referred to in an interrelated manner.

The exhaust gas purification system employing the exhaust gas purifying catalyst of the present invention is described below.

«Exhaust Gas Purification System»

Embodiments of the exhaust gas purification system of the present invention are described below. The following embodiments are merely exemplary, and the exhaust gas purification system of the present invention is not limited thereto.

<First Embodiment>

A first embodiment of the exhaust gas purification system of the present invention includes an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device. This exhaust gas purification system is characterized in that the first exhaust gas purifying catalyst device includes a substrate, a lower catalyst layer disposed on the substrate, and an upper catalyst layer disposed on the lower catalyst layer and having a surface facing the flow path of the exhaust gas, the upper catalyst layer contains the above-described fine Pd-Rh composite metal particle in an amount of 0.1 g or more and 1.1 g or less per L of the volume of the substrate, and in the lower and upper catalyst layers, the position having a highest concentration of the fine Pd-Rh composite metal particle is the surface of the upper catalyst layer.

The surface of the catalyst layer of the exhaust gas purifying catalyst device, that is, the surface facing the flow path of the exhaust gas, is first put into contact with a high-temperature and unpurified exhaust gas and accordingly, is exposed to a harsh environment. In such a harsh environment, typically, it is likely that the catalyst metal contained in the catalyst layer undergoes grain growth and the catalytic activity thereof is reduced.

On the other hand, the fine Pd-Rh composite metal particle of the exhaust gas purifying catalyst of the present invention is insusceptible to grain growth and exhibits high catalytic activity even under high temperature conditions. Accordingly, in order to purify an exhaust gas under high temperature conditions allowing the diffusion rate limiting to be achieved, it is preferable for the exhaust gas purifying catalyst of the present invention to be present at a high concentration in the upper catalyst layer surface that is put into contact with the exhaust gas at highest frequency. Consequently, according to the first embodiment of the exhaust gas purification system of the present invention, a higher exhaust gas purifying ability than ever can be achieved under high temperature conditions.

Here, the diffusion rate limiting is described. In general, the speed of catalytic reaction is controlled by the speed at which the reactant reaches the catalyst (diffusion rate) and the speed at which the catalyst catalyzes the chemical reaction of the reactant (reaction rate), and the diffusion rate limiting means a state where under sufficiently high reaction rate conditions (for example, high temperature conditions), the diffusion rate substantially corresponds to the speed of the catalytic reaction.

In the first embodiment, the amount of the fine composite metal particle on the surface of the upper catalyst layer of the first exhaust gas purifying device is 0.1 g or more, 0.2 g or more, 0.3 g or more, or 0.4 g or more, and/or 1.1 g or less, 1.0 g or less, 0.9 g or less, or 0.8 g or less, per L of the volume of the substrate.

When the amount of the fine Pd-Rh composite metal particle is large, the exhaust gas purifying ability is enhanced. In addition, when the amount above is small, highness of the catalytic activity of the fine Pd-Rh composite metal particle is notably shown, compared with the conventional fine Pd metal particle.

Specifically, both the fine Pd metal particle and the fine Pd-Rh composite metal particle exhibit higher catalytic activity as the amounts thereof are larger, and therefore, when the amounts thereof are excessive, substantially no difference is recognized in the catalytic activity between the fine Pd metal particle and the fine Pd-Rh composite metal particle In contrast, when the amount of the fine Pd metal particle is small, the catalytic activity thereof is likely to be reduced, but on the other hand, when the amount of the fine Pd-Rh composite metal particle is small, the catalytic activity thereof is hardly reduced. Consequently, as the amount of the fine Pd metal particle or the fine Pd-Rh composite metal particle is smaller, the difference in the catalytic activity therebetween is larger.

Incidentally, the state of the catalyst metal being supported on the surface of the upper catalyst layer may be defined by the upper layer supporting rate. The upper layer supporting rate is a value obtained by photographing a cross-section of the upper catalyst layer by electron probe microanalyzer (EPMA) and dividing the length in the upper catalyst layer in a portion having distributed therein Pd detected from the EPMA image, that is, the length of a portion having distributed therein Pd in the layer thickness direction from the surface of the upper catalyst layer, by the layer thickness of the upper catalyst layer. This can be expressed by the following formula:

Upper layer supporting rate (%)=100×length of a portion having distributed therein Pd in the layer thickness direction from the surface of the upper catalyst layer/layer thickness of the upper catalyst layer

Accordingly, in the present invention, the catalyst metal being "supported on the surface of the upper catalyst layer may be defined by the upper layer supporting rate being 40% or less, 38% or less, 36% or less, 35% or less, 34% or less, 32% or less, 30% or less, 28% or less, 26% or less, 25% or less, 23% or less, 21% or less, or 20% or less, and/or the upper layer supporting rate being more than 0%, 1% or more, 3% or more, 5% or more, 7% or more, 9% or more, 10% or more, 13% or more, 15% or more, 17% or more, or 19% or more.

When the upper layer supporting rate is small, the exhaust gas purifying ability is likely to be enhanced under high temperature conditions subject to diffusion rate limiting.

<Second Embodiment>

In the second embodiment of the exhaust gas purification system of the present invention, the configuration thereof is the same as that of the first embodiment except for the first exhaust gas purifying catalyst device. Specifically, in the second embodiment, the first exhaust gas purifying catalyst device includes a substrate, a lower catalyst layer disposed on the substrate, and an upper catalyst layer disposed on the lower catalyst layer and having a surface facing the flow path of the exhaust gas, the upper catalyst layer contains the above-described fine Pd-Rh composite metal particle in an amount of 0.1 g or more and 1.2 g or less per L of the volume of the substrate, and in the upper catalyst layer, the concentration of the fine Pd-Rh composite metal particle is substantially uniform in the thickness direction.

At a temperature lower than high temperature conditions allowing the diffusion rate limiting to be achieved, typically, an exhaust gas that could not be purified on the surface of the catalyst layer of the exhaust gas purifying catalyst device or at a shallow depth thereof diffuses into the catalyst layer. Accordingly, in order to purify the exhaust gas under low temperature conditions, it is preferred that the fine Pd-Rh composite metal particle is substantially uniformly dispersed in the upper catalyst layer. That is, according to the second embodiment of the exhaust gas purification system of the present invention, a higher exhaust gas purifying ability than ever can be achieved under low temperature conditions.

In the second embodiment, the amount of the fine composite metal particle contained in the upper catalyst layer of the first exhaust gas purifying device is 0.1 g or more, 0.2 g or more, 0.3 g or more, or 0.4 g or more, and/or 1.2 g or less, 1.1 g or less, 1.0 g or less, 0.9 g or less, or 0.8 g or less, per L of the volume of the substrate. As to the theory regarding the amount, please refer to the description of the first embodiment.

<Third Embodiment>

In the third embodiment of the exhaust gas purification system of the present invention, the configuration thereof is the same as that of the first embodiment except for the first exhaust gas purifying catalyst device. Specifically, in the third embodiment, the first exhaust gas purifying catalyst device includes a substrate, a lower catalyst layer disposed on the substrate, and an upper catalyst layer disposed on the lower catalyst layer and having a surface facing the flow path of the exhaust gas, the lower catalyst layer contains a ceria-based support particle having supported thereon the above-described fine Pd-Rh composite metal particle in an amount of 75 g or less per L of the volume of the substrate, and in the lower catalyst layer, the concentration of the fine Pd-Rh composite metal particle is substantially uniform in the thickness direction.

Conventionally, physical size reduction, i.e., downsizing, of the exhaust gas purifying catalyst device has been demanded. However, since the amount of the exhaust gas discharged is not changed, an exhaust gas purifying ability substantially equal to or greater than that of a standard-sized exhaust gas purifying catalyst device is required of the downsized exhaust gas purifying catalyst device.

In order to meet this requirement, even when the substrate constituting the exhaust gas purifying catalyst device is downsized, typically, a catalyst component in the same amount as the conventional amount needs to be mounted. On the other hand, as the amount of the catalyst component mounted on the substrate is larger, generally, the flow passageway of the substrate, through which the exhaust gas passes, is narrowed, and the likelihood of causing a pressure loss is high.

The present inventors have found that these problems can be solved by enhancing the catalytic activity of such a catalyst component and reducing the amount thereof. Specifically, the present inventors have found that a ceria-based support particle having supported thereon fine Pd-Rh composite metal particles as a catalyst component exhibits high OSC compared with a ceria-based support particle having supported thereon a conventional catalyst metal.

Although not intended to be bound by any theory, the reason for exhibiting high OSC is considered because the number of active sites of Pd in the fine Pd-Rh composite metal particle having a sintering-preventing effect is larger than the number of active sites of the fine Pd metal particle and in addition, because an active site for oxygen storage is present in the interface portion between the fine Pd metal particle and ceria and the number of active sites for oxygen storage in the interface portion between Pd and ceria in the fine Pd-Rh composite metal particle is larger than the number of active sites for oxygen storage in the interface portion between the fine Pd metal particle and ceria.

In the third embodiment, the amount of the ceria-based support particle having supported thereon the exhaust gas purifying catalyst of the present invention, contained in the lower catalyst layer of the first exhaust gas purifying device, is more than 0.0 g, 5.0 g or more, 10.0 g or more, 15.0 g or more, 20.0 g or more, or 25.0 g or more, and/or 75.0 g or less, 73.0 g or less, 70.0 g or less, 65.0 g or less, 60 g or less, or 55.0 g or less, per L of the volume of the substrate.

When the amount of the ceria-based support particle having supported thereon the exhaust gas purifying catalyst of the present invention is large, the oxygen storage amount or NOx adsorption ability can be increased. In addition, when the amount above is small, enhanced oxygen storage capacity can be shown, compared with the ceria-based support particle having supported thereon the conventional catalyst metal.

In the third embodiment of the exhaust gas purification system of the present invention, the substrate has an upstream end serving as an inlet portion allowing the exhaust gas to enter and a downstream end serving as an outlet portion allowing the exhaust gas to exit, and the lower catalyst layer is formed in a length of 80% or less, 75% or less, 70% or less, 65% or less, or 60% or less, and/or 10% or more, 15% or more, 20% or more, 25% or more, 30% or more, 35% or more, 40% or more, 45% or more, or 50% or more, of the total length of the substrate over a region extending from upstream end to downstream end of the substrate.

As described above, as the amount of the catalyst component mounted on the substrate is larger, generally, the flow passageway of the substrate, through which the exhaust gas passes, is narrowed, and the likelihood of causing a pressure loss is high. In this connection, the present inventors have further found that when the forming position of the catalyst layer containing the catalyst component is changed, the oxygen storage amount of the catalyst component can be enhanced without changing the amount of the catalyst component. Specifically, as described above, the oxygen storage amount of the catalyst component can be enhanced by forming the lower catalyst layer in a length of 80% or less of the total length of the substrate over a region extending from upstream end to downstream end of the substrate.

Although not intended to be bound by any theory, it is considered that a catalytic reaction is likely to be caused on the upstream end side of the substrate, compared with the downstream end side, and the enhancement of oxygen storage amount of the catalyst component is thereby achieved.

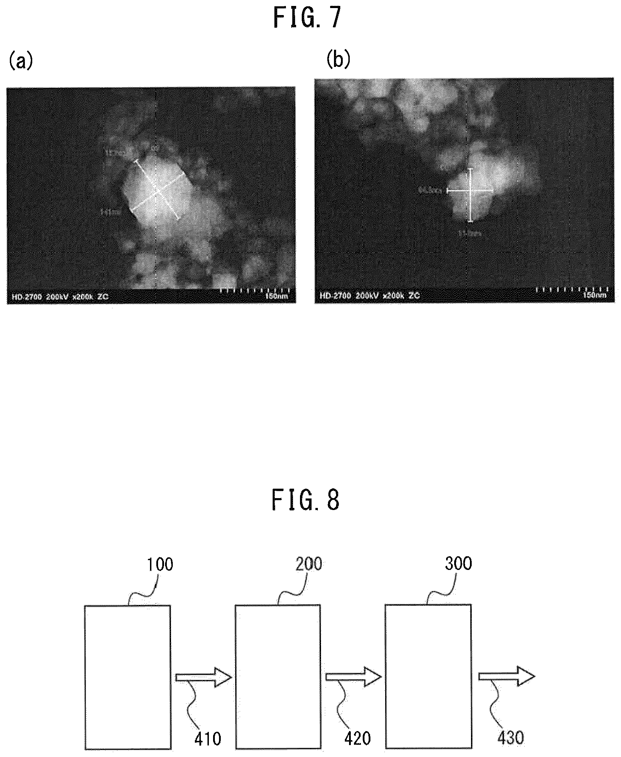

Fig. 8 is a schematic diagram of the exhaust gas purification system of the present invention. In the exhaust gas purification system of Fig. 8, an internal combustion engine 100 for discharging an exhaust gas 410, a first exhaust gas purifying catalyst device 200 for treating the exhaust gas 410, and a second exhaust gas purifying catalyst device 300 for further treating the treated exhaust gas 420 and discharging the further treated exhaust gas 430 are arranged in this order.

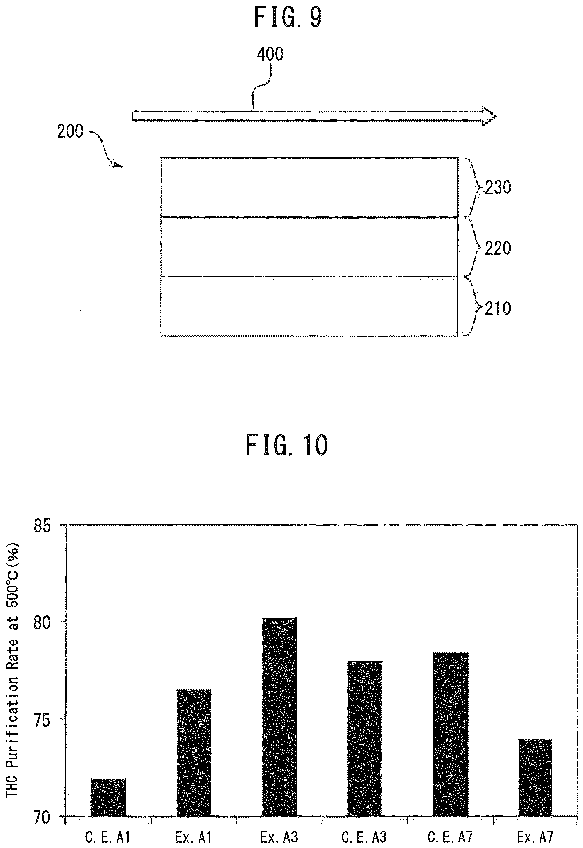

Fig. 9 is a schematic diagram of the first exhaust gas purifying catalyst device of the exhaust gas purification system of the present invention. The first exhaust gas purifying catalyst device 200 of Fig. 9 includes a substrate 210, a lower catalyst layer 220, and an upper catalyst layer 230, and an exhaust gas 400 passes above the upper catalyst layer 230.

In the following, the configuration of the exhaust gas purification system is described in detail.

<Internal Combustion Engine>

An exhaust gas is discharged by the combustion of an internal combustion engine. Examples of the internal combustion engine are not particularly limited and include a gasoline engine, a diesel engine, and a lean burn engine.

<First Exhaust Gas Purifying Catalyst Device>

The first exhaust gas purifying catalyst device is also called a start converter (SC) catalyst device and purifies an exhaust gas discharged from the internal combustion engine. The first exhaust gas purifying catalyst device includes a substrate, a lower catalyst layer disposed on the substrate, and an upper catalyst layer disposed on the lower catalyst layer and having a surface facing the flow path of the exhaust gas.

(Substrate)

The substrate has a gas flow path (also referred to as a pore) for passing an exhaust gas. The structure of the substrate may be, for example, a honeycomb structure, a foam structure, or a plate structure. Examples of the material for the substrate are not particularly limited, and the substrate may be made of a ceramic such as cordierite and SiC, or a metal, etc.

(Lower Catalyst Layer)

In the first to third embodiments, the catalyst component of the lower catalyst layer is not particularly limited but may contain a catalyst metal, a support particle, a sintering inhibitor, and a binder. In the third embodiment, the catalyst component of the lower catalyst layer contains a ceria-based support particle, in addition to the catalyst components above, and the fine Pd-Rh composite metal particle of the exhaust gas purifying catalyst of the present invention is supported on the ceria-based support particle.

Examples of the catalyst metal include a platinum group element, such as Pt, Pd, Rh and a combination thereof, and a solid solution thereof. Of course, the catalyst metal may contain the fine Pd-Rh composite metal particle contained in the exhaust gas purifying catalyst of the present invention.

As for examples of the support particle, please refer to the paragraph of "support particle" of the exhaust gas purifying catalyst of the present invention above.

Examples of the ceria-based support particle are not particularly limited, but the support particle may be a support particle of ceria alone or a composite oxide containing ceria and single or a plurality of other oxides. The "composite oxide" means a material in which at least two kinds of metal oxides are at least partially dissolved into solid solution. Accordingly, for example, a composite oxide containing ceria and zirconia means that ceria and zirconia are at least partially dissolved into solid solution and, among others, ceria and zirconia at least partially form together an oxide of single crystal structure. For example, the "composite oxide containing ceria and zirconia" may have not only a portion in which ceria and zirconia are dissolved into solid solution, but also a portion in which ceria and zirconia are each present independently.

Specific examples of the ceria-based support particle are not particularly limited but may be a ceria ($CeO_2$)-zirconia ($ZrO_2$) composite oxide, or an alumina ($Al_2O_3$)-ceria-zirconia composite oxide. In these composite oxides, a rare earth element, for example, yttrium (Y), lanthanum (La), neodymium (Nd), and/or praseodymium (Pr), may be added, and such an element may take the form of an oxide thereof.

The amount of the fine Pd-Rh composite metal particle of the exhaust gas purifying catalyst of the present invention supported on the ceria-based support particle may be, per 100 parts by mass of the ceria-based support particle, 0.01 parts by mass or more, 0.10 parts by mass or more, 0.20 parts by mass or more, 0.30 parts by mass or more, 0.50 parts by mass or more, 0.70 parts by mass or more, or 1.00 parts by mass or more, and/or may be 5.00 parts by mass or less, 3.00 parts by mass or less, or 1.00 parts by mass or less.

The sintering inhibitor can inhibit sintering of support particles with each other, sintering of catalyst metals with each other, and burying of a catalyst metal into a support.

Examples of the binder are not particularly limited, but the binder may be an alumina binder.

(Upper Catalyst Layer)

In the first to third embodiments, the catalyst component of the upper catalyst layer is not particularly limited but may contain a catalyst metal, a support particle, a sintering inhibitor, and a binder. In the second embodiment, the catalyst component of the upper catalyst layer contains the fine Pd-Rh composite metal particle of the exhaust gas purifying catalyst of the present invention, in addition to the catalyst components above.

With respect to the catalyst metal, support particle, sintering inhibitor and binder, please refer to description regarding the lower catalyst layer above. In addition, with respect to the fine Pd-Rh composite metal particle, please refer to description regarding the exhaust gas purifying catalyst of the present invention above.

<Second Exhaust Gas Purifying Catalyst Device>

The second exhaust gas purifying catalyst device further treats the exhaust gas treated in the first exhaust gas purifying catalyst device. The second exhaust gas purifying catalyst device is also called an underfloor (UF) catalyst device and may be, for example, a three-way (TW) catalyst device, an NOx storage reduction (NSR) catalyst device, or a selective catalytic reduction (SCR) catalyst device.

«Production Method of First Exhaust Gas Purifying Catalyst Device»

The method for producing the first exhaust gas purifying catalyst device includes at least the following steps:

a step of applying a slurry for lower catalyst layer onto a substrate to form a slurry layer for lower catalyst layer, and drying and firing the slurry layer for lower catalyst layer to form a lower catalyst layer, and

a step of further applying a slurry for upper catalyst layer onto the lower catalyst layer formed on a surface of the substrate to form a slurry layer for upper catalyst layer, and drying and firing the slurry layer for upper catalyst layer to form an upper catalyst layer.

<Production Method of First Exhaust Gas Purifying Catalyst Device: first embodiment>

The method for producing the first exhaust gas purifying catalyst device related to the first embodiment above further includes the following step and properties, in addition to the common steps above:

a step of impregnating and supporting a solution containing Pd ion and Rh ion into and on the surface of the upper catalyst layer, and drying and firing the upper catalyst layer,

the ratio of the total mol of Rh ion to the total mol of Pd ion and Rh ion in the solution is 0.5 or more and 6.5 or less, and the amount of Pd ion and Rh ion in the solution is 0.1 g or more, 0.2 g or more, 0.3 g or more, or 0.4 g or more, and/or 1.1 g or less, 1.0 g or less, 0.9 g or less, or 0.8 g or less, per L of the volume of the substrate.

By employing this method, the first exhaust gas purifying catalyst device in the first embodiment of the exhaust gas purification system above can be produced.

In addition, the upper layer supporting rate described above can be varied by the value of pH of the solution containing Pd ion and Rh ion. The pH can be easily adjusted by one skilled in the art with reference to the present description.

<Production Method of First Exhaust Gas Purifying Catalyst Device: second embodiment>

The method for producing the first exhaust gas purifying catalyst device related to the second embodiment above further includes the following properties, in addition to the common steps above:

the slurry for upper catalyst layer contains a support particle having supported thereon the fine Pd-Rh composite metal particle, and

the amount of the fine Pd-Rh composite metal particle supported on the support particle is 0.1 g or more, 0.2 g or more, 0.3 g or more, or 0.4 g or more, and/or 1.2 g or less, 1.1 g or less, 1.0 g or less, 0.9 g or less, or 0.8 g or less, per L of the volume of the substrate.

By employing this method, the first exhaust gas purifying catalyst device in the second embodiment of the exhaust gas purification system above can be produced.

<Production Method of First Exhaust Gas Purifying Catalyst Device: third embodiment>

The method for producing the first exhaust gas purifying catalyst device related to the second embodiment above further includes the following properties, in addition to the common steps above:

the slurry for lower catalyst layer contains a support particle having supported thereon the fine Pd-Rh composite metal particle, and
the amount of the support particle having supported thereon the fine Pd-Rh composite metal particle is more than 0.0 g, 5.0 g or more, 10.0 g or more, 15.0 g or more, 20.0 g or more, or 25.0 g or more, and/or 75.0 g or less, 73.0 g or less, 70.0 g or less, 65.0 g or less, 60 g or less, or 55.0 g or less, per L of the volume of the substrate.

By employing this method, the first exhaust gas purifying catalyst device in the third embodiment of the exhaust gas purification system above can be produced.

<Step of Forming Lower Catalyst Layer>

(Preparation and Application of Lower Catalyst Layer Slurry)

The step of forming the lower catalyst layer may include an operation of preparing a lower catalyst layer slurry.
The lower catalyst layer slurry may contain a solvent and a binder, in addition to the materials contained in the lower catalyst layer of the exhaust gas purifying catalyst device of the present invention above.
Examples of the solvent are not particularly limited, but the solvent may be water or ion-exchanged water. Examples of the binder are not particularly limited, but the solvent may be an alumina binder.
Examples of the method for applying the lower catalyst layer slurry are not particularly limited, but the method may be a washcoat method.

(Drying, etc. of Slurry Layer for Lower Catalyst Layer)

The temperature, time and atmosphere at the time of drying the slurry layer for lower catalyst layer are not particularly limited. The drying temperature may be, for example, 70°C or more, 75°C or more, 80°C or more, or 90°C or more, and may be 150°C or less, 140°C or less, 130°C or less, or 120°C or less. The drying time may be, for example, 1 hour or more, 2 hours or more, 3 hours or more, or 4 hours or more, and may be 12 hours or less, 10 hours or less, 8 hours or less, or 6 hours or less. The drying atmosphere may be, for example, air atmosphere.
The temperature, time and atmosphere at the time of firing the slurry layer for lower catalyst layer are not particularly limited. The firing temperature may be, for example, 300°C or more, 400°C or more, or 500°C or more, and may be 1,000°C or less, 900°C or less, 800°C or less, or 700°C or less. The firing time may be, for example, 1 hour or more, 2 hours or more, 3 hours or more, or 4 hours or more, and may be 12 hours or less, 10 hours or less, 8 hours or less, or 6 hours or less. The firing atmosphere may be, for example, air atmosphere.

<Step of Forming Upper Catalyst Layer>

(Preparation and Application of Upper Catalyst Layer Slurry and Drying, etc. of Layer)

The step of forming the upper catalyst layer may include an operation of preparing a upper catalyst layer slurry.
With respect to the preparation and application of the upper catalyst layer slurry and drying, etc. of the layer, the description above of Preparation and Application of Lower Catalyst Layer Slurry and Drying, etc. of Layer may be referred to.

<Step of Supporting Fine Pd-Rh Composite Metal Particle on Surface of Upper Catalyst Layer>

The step of supporting the fine Pd-Rh composite metal particle on a surface of the upper catalyst layer may include an operation of preparing a solution containing Pd ion and Rh ion. With respect to the preparation method of a solution containing Pd ion and Rh ion, please refer to the paragraph of "Production Method of Exhaust Gas Purifying Catalyst".

This solution is applied onto a surface of the upper catalyst layer, dried and fired. As for the drying or firing conditions, the conditions for drying and firing of the slurry layer for lower catalyst layer may be employed.

«Exhaust Gas Purifying Method»

The method of the present invention for purifying an exhaust gas includes bringing an exhaust gas containing HC, CO and NOx into contact with the exhaust gas purifying catalyst of the present invention in a stoichiometric atmosphere, thereby purifying the exhaust gas through oxidation of HC and CO and reduction of NOx.

The method of the present invention is preferably applied to an internal combustion engine running in a stoichiometric atmosphere. In the stoichiometric atmosphere, HC and CO as reducing agents and NOx as oxidizing agent can be reacted at a theoretically equivalent ratio to convert these into $H_2O$, $CO_2$ and $N_2$.

The method for bringing an exhaust gas into contact with the exhaust gas purifying catalyst of the present invention in a stoichiometric atmosphere may be an arbitrarily selected method.

With respect to the method of the present invention for purifying an exhaust gas, the description above of the exhaust gas purifying catalyst of the present invention and the description above of the production method of the exhaust gas purifying catalyst may be referred to.

The present invention is described in greater detail below by referring to the following Examples, however, the scope of the present invention is of course not limited by these Examples.

EXAMPLES

«Example 3: coprecipitation method»

<Mixed Solution Preparation Step>

Into a beaker, 31.25 g of a Pd nitrate solution (5 g in terms of mass of Pd, CATALER Corporation) was charged. Furthermore, 9.28 g of an Rh nitrate solution (0.26 g in terms of mass of Rh, CATALER Corporation) was charged into the beaker. A mixed solution prepared by mixing these two kinds of metal nitrate solutions was further stirred over 1 hour or more. Subsequently, a 15 mass% TMAH solution (Wako Pure Chemical Industries, Ltd.) was added to the mixed solution such that the pH of the mixed solution is 10 or more. Thereafter, the concentration of the mixed solution was adjusted with pure water to give a total metal concentration of 3 mass%.

Incidentally, 5 g of Pd corresponds to 0.0470 mol, and 0.36 g of Rh corresponds to 0.0025 mol. That is, the molar ratio of Pd and Rh in the mixed solution corresponds to 95:5.

<Catalyst Precursor Slurry Preparation Step>

The mixed solution was measured to take 5.7 mass% (0.3 g/5.26 g). In other words, part of the mixed solution was measured and taken such that the total metal mass of Pd and Rh is 0.3 g. Furthermore, 30 g of a $ZrO_2$-$CeO_2$ composite oxide support was added as a support particle to the measured and taken mixed solution and mixed over 30 minutes to prepare a catalyst precursor slurry. The ratio between $ZrO_2$ and $CeO_2$ in the composite oxide support was 70:30.

<Exhaust Gas Purifying Catalyst Preparation Step>

The catalyst precursor slurry was dried at 100°C overnight to produce a solid material. The solid material was pulverized in a mortar and fired at 500°C over 3 hours to obtain a fired product.

The fired product was pressed at 1 ton/cm$^2$ to form a solid material, and the solid material was put in a sieve and tapped in a mortar to obtain the exhaust gas purifying catalyst of Example 3 having a pellet shape of 1.0 to 1.7 mm in diameter.

«Comparative Example 1, Examples 1 and 2, and Reference Example: coprecipitation method»

The exhaust gas purifying catalysts of Comparative Example 1, Examples 1 and 2, and Reference Example were obtained in the same manner as in Example 3 except for, in the mixed solution preparation, preparing the mixed solution such that the molar ratio of Pd and Rh in the mixed solution is 100:0, 99:1, 97:3, and 93:7, respectively.

«Comparative Example 2: co-impregnation method»

The exhaust gas purifying catalyst of Comparative Example 2 was obtained in the same manner as in Example 3 except that in the mixed solution preparation step, the TMAH solution was not used.

With respect to the exhaust gas purifying catalysts of respective working example above, the production process and the molar ratio of Pd and Rh (sometimes referred to as "Pd:Rh (molar ratio)") contained are shown in Table 1.

[Table 1]

Table 1

|  | Production Process | Pd:Rh (molar ratio) |
|---|---|---|
| Comparative Example 1 | coprecipitation | 100:0 |
| Example 1 | coprecipitation | 99:1 |
| Example 2 | coprecipitation | 97:3 |
| Example 3 | coprecipitation | 95:5 |
| Reference Example | coprecipitation | 93:7 |
| Comparative Example 2 | co-impregnation | 95:5 |

<<Evaluation 1>>

With respect to the exhaust gas purifying catalysts of Examples 1 to 3, Comparative Examples 1 and 2, and Reference Example, a thermal endurance test was conducted, XRD analysis was performed, and evaluation of X-ray diffraction pattern, evaluation of degree of compounding, evaluation of average particle diameter and evaluation of exhaust gas purifying ability were performed.

<Thermal Endurance Test>

4 g of the exhaust gas purifying catalyst of each working example above was collected and used as the sample. The steps of the thermal endurance test are as in (1) to (5) below:

(1) the sample was placed in an $N_2$ atmosphere at a gas flow velocity of 10 L/min, and the sample was heated from normal temperature up to 1,050°C;
(2) the atmosphere was changed to a mixed gas R, and the mixed gas R was exposed to the sample at a flow velocity of 10 L/min over 2 minutes;
(3) the atmosphere was changed to a mixed gas L, and the mixed gas L was exposed to the sample at a flow velocity of 10 L/min over 2 minutes;
(4) subsequently, steps (2) and (3) were alternately repeated, and the total number of times of steps (2) and (3) was 151, that is, steps (2) and (3) were performed for a total time of 302 minutes, this operation being set to end at step (2); and
(5) thereafter, the atmosphere was switched to $N_2$ atmosphere, and the temperature of the sample was lowered from 1,050°C to normal temperature.

Incidentally, the components constituting the mixed gas R (rich) were CO: 1%, $H_2O$: 3%, and $N_2$ balance, and the components constituting the mixed gas L (lean) were $O_2$: 5%, $H_2O$: 3%, and $N_2$ balance. With respect to the thermal endurance test, Fig. 2 illustrates the relationship between the time t and the temperature °C.

<Evaluation of X-Ray Diffraction Pattern>

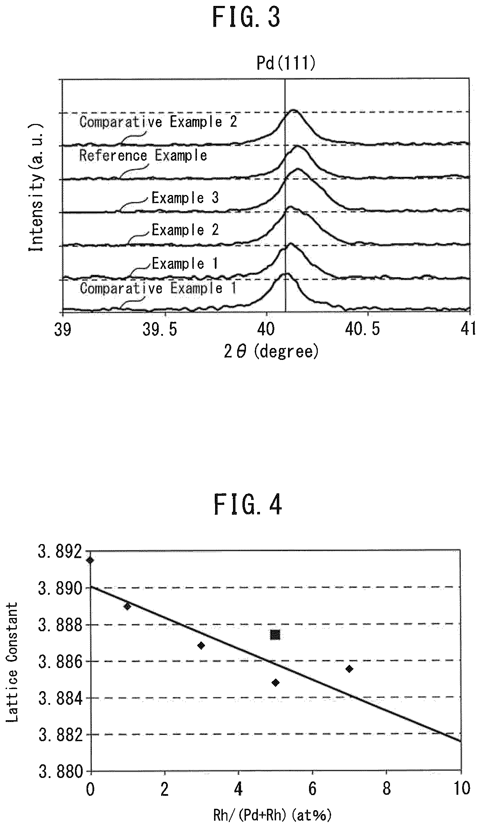

The exhaust gas purifying catalysts of respective working examples above were measured by the X-ray diffraction (XRD) method. This measurement was measured using an X-ray diffraction apparatus (RINT2000, manufactured by Rigaku Corporation). Fig. 3 illustrates the results.

Here, the measurement conditions of XRD analysis are as follows.

The measuring mode is FT (Fixed Time) mode; the X-ray source is CuKα (λ: 1.5403 angstrom); the step width is 0.01 deg, the measurement time is 3.0 sec; the divergence slit (DS) is 2/3 deg; the scattering slit (SS) was 2/3 deg; the receiving slit (RS) is 0.5 mm; the tube voltage is 50 kV; and the tube current is 300 mA.

Fig. 3 is a diagram illustrating X-ray diffraction patterns of the exhaust gas purifying catalysts of Examples 1 to 3, Comparative Examples 1 and 2, and Reference Example. In Fig. 3, a vertical line showing the peak position on a diffraction plane in the case of taking the crystal lattice plane of Pd(111) single crystal as the diffraction plane is depicted. The peak position of Comparative Example 1 containing only the fine Pd particle is equal to the peak position on the diffraction plane. It is seen that compared with the peak position of Comparative Example 1, the peak positions of Examples 1 to 3, Comparative Example 2, and Reference Example are shifted to the high angle side. This reveals Pd and Rh are contained in the exhaust gas purifying catalysts of these working examples. The degree of compounding of the exhaust gas purifying catalysts of Examples 1 to 3, Comparative Example 2, and Reference Example is judged by taking into account not only the peak position but also the composition ratio.

<Evaluation of Degree of Compounding>

From the relationship among the lattice constant 3.890105 angstrom of Pd(111) single crystal, the lattice constant 3.804646 angstrom of Rh(111) single crystal, and the average ratio (A) of Pd and Rh, the following formula (I) was derived based on the Vegard's law. Furthermore, the average ratio of the total number of Rh atoms to the total number of Pd and Rh atoms related to Examples 1 to 3, Comparative Examples 1 and 2, and Reference Example is substituted into A of formula (I) to calculate the theoretical lattice constant B (angstrom).

$$B = -8.5459 \times 10^{-2} \times A + 3.890105 \qquad (I)$$

[wherein As is the average ratio A.]

In addition, from the XRD analysis above, the actual lattice constants of the exhaust gas purifying catalysts of Examples 1 to 3, Comparative Examples 1 and 2, and Reference Example were calculated. Specifically, a half value of the peak position (2θ) under the conditions of an X-ray wavelength of (1.5403 angstrom) and a Miller index of Pd of (111) with the diffraction plane being the crystal lattice plane of the crystal lattice plane having the Miller index above was substituted into the following formula (II) to calculate the actual lattice constant C (angstrom).

$$C = \lambda \times (h^2 + k^2 + l^2)^{1/2}/(2\sin\theta) \qquad (II)$$

[wherein

λ is the X-ray wavelength,
h, k and 1 are the Miller indices, and
θ is a half of the diffraction angle 2θ.]

With respect to the exhaust gas purifying catalysts of respective working examples above, the production process, the molar ratio of Pd and Rh (sometimes referred to as "Pd:Rh (molar ratio)") contained, Rh/(Pd+Rh) (at%), the peak position 2θ, the half value of 2θ, the theoretical lattice constant B (angstrom), the actual lattice constant C (angstrom), and the absolute value of difference (|B-C|) are shown in Table 2 below. In addition, with respect to the exhaust gas purifying catalysts of respective working examples, Fig. 4 illustrates the relationship between Rh/(Pd+Rh) (at%) and the lattice constant.

[Table 2]

Table 2

| | Comparative Example 1 | Example 1 | Example 2 | Example 3 | Reference Example | Comparative Example 2 |
|---|---|---|---|---|---|---|
| Production process | coprecipitation | coprecipitation | coprecipitation | coprecipitation | coprecipitation | co-impregnation |
| Pd:Rh (molar ratio) | 100:0 | 99:1 | 97:3 | 95:5 | 93:7 | 95:5 |
| Rh/(Pd+Rh) (at%) | 0 | 1 | 3 | 5 | 7 | 5 |
| Peak position $2\theta$ | 40.093 | 40.120 | 40.143 | 40.165 | 40.157 | 40.137 |
| Half value of $2\theta$ | 20.0465 | 20.0600 | 20.0715 | 20.0825 | 20.0785 | 20.0685 |
| Theoretical lattice constant B (angstrom) | 3.890105 | 3.889250 | 3.887541 | 3.885832 | 3.884123 | 3.885832 |
| Actual lattice constant C (angstrom) | 3.891501 | 3.888989 | 3.886853 | 3.884812 | 3.885554 | 3.887410 |
| Absolute value (|B-C|) | $1.396\times10^{-3}$ | $0.261\times10^{-3}$ | $0.688\times10^{-3}$ | $1.020\times10^{-3}$ | $1.431\times10^{-3}$ | $1.578\times10^{-3}$ |

As described above, as the absolute value of the difference between the theoretical lattice constant B and the actual lattice constant C is smaller, the degree of mutual dissolving of Pd and Rh into solid solution is higher. Accordingly, it is seen from Table 2 that the degree of compounding of Example 1 ($0.261 \times 10^{-3}$) is highest and the degree of compounding of Comparative Example 2 ($1.578 \times 10^{-3}$) is lowest. More specifically, in Example 1, a large number of fine composite metal particles may be formed at a high solid solution degree. However, in Comparative Example 2, it is likely that a plurality of fine particles are formed separately as fine Pd particle and fine Rh particle and even when a fine composite metal particle has been formed, in every single fine composite metal particle, the proportion of a portion in which Pd and Rh are dissolved into solid solution may be low, whereas the proportion of a portion in which the Pd and Rh are each present independently may be high.

In Fig. 4, the plots correspond to the exhaust gas purifying catalysts of respective working examples above, and the oblique line indicates formula (I). More specifically, it is indicated that as the plot is closer to the oblique line, the degree of compounding of fine particles in the working example corresponding to the plot is higher.

<Evaluation of Average Particle Diameter>

In addition, from the results of XRD analysis of the exhaust gas purifying catalysts of respective working examples, the particle diameter (nm) of the fine particle after thermal endurance test was determined using the Scherrer equation. The Scherrer equation can be represented by the following formula (VII):

$$\tau = K \times \lambda / (\beta \times COS\theta) \qquad \text{(VII)}$$

[wherein,

shape factor: K

X-ray wavelength: $\lambda$

full width at half maximum of peak: $\beta$

Bragg angle: $\theta$

particle diameter of fine particle: $\tau$].

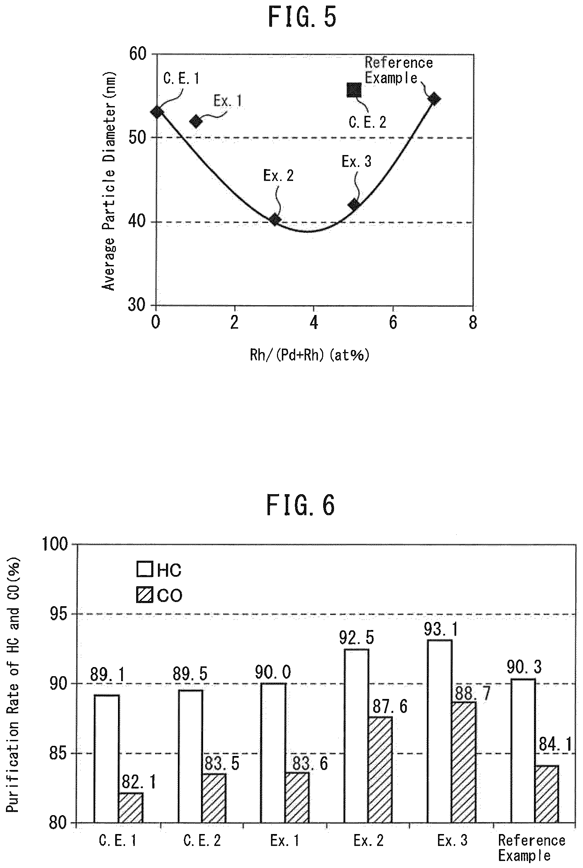

With respect to the exhaust gas purifying catalysts of respective working examples above, the production process, the molar ratio of Pd and Rh (sometimes referred to as "Pd:Rh (molar ratio)") contained, Rh/(Pd+Rh) (at%), the average particle diameter (nm) of fine particles calculated from the Scherrer equation, the theoretical lattice constant B (angstrom), the actual lattice constant C (angstrom), and the absolute value of difference (|B-C|) are shown in Table 3 below. In addition, with respect to the exhaust gas purifying catalysts of respective working examples, Fig. 5 illustrates the relationship between Rh/(Pd+Rh) (at%) and the average particle diameter (nm) of fine particles.

[Table 3]

Table 3

|  | Comparative Example 1 | Example 1 | Example 2 | Example 3 | Reference Example | Comparative Example 2 |
|---|---|---|---|---|---|---|
| Production process | coprecipitation | coprecipitation | coprecipitation | coprecipitation | coprecipitation | co-impregnation |
| Pd:Rh (molar ratio) | 100: 0 | 99: 1 | 97: 3 | 95: 5 | 93: 7 | 95: 5 |
| Rh/(Pd+Rh) (at%) | 0 | 1 | 3 | 5 | 7 | 5 |
| Theoretical lattice constant B (angstrom) | 3.890105 | 3.889250 | 3.887541 | 3.885832 | 3.884123 | 3.885832 |
| Actual lattice constant C (angstrom) | 3.891501 | 3.888989 | 3.886853 | 3.884812 | 3.885554 | 3.887410 |
| Absolute value (|B-C|) | $1.396 \times 10^{-3}$ | $0.261 \times 10^{-3}$ | $0.688 \times 10^{-3}$ | $1.020 \times 10^{-3}$ | $1.431 \times 10^{-3}$ | $1.578 \times 10^{-3}$ |
| Average particle diameter of fine particles (nm) | 53.1 | 52.0 | 40.3 | 42.0 | 54.8 | 55.8 |

It is seen from Table 3 and Fig. 5 that compared with the average particle diameter of Comparative Example 1(C.E.1), the average particle diameters of Examples 1 to 3 (Ex. 1 to 3) are smaller. The reason therefor is considered that in the fine composite metal particle contained in the exhaust gas purifying catalysts of Examples 1 to 3, which is thermally stable, Rh relatively insusceptible to grain growth is compounded with Pd relatively susceptible to grain growth and grain growth of fine composite metal particles was thereby suppressed.

In addition, as seen from Table 3 and Fig. 5, when the average particle diameters of Example 3 (Ex.3)and Comparative Example 2 (C.E.2) each having a value of Rh/(Pd+Rh) of 5 are compared, the average particle diameter of Example 3 (Ex.3) is smaller than the average particle diameter of Comparative Example 2; and furthermore, with respect to the absolute value of difference (|B-C|), the value of Example 3 is smaller than the value of Comparative Example 2. Accordingly, it is understood from these facts that when the composition ratio is the same, as the degree of compounding is higher, the average particle diameter is smaller.

Incidentally, it is seen from Table 3 that with respect to the absolute value of difference (|B-C|) indicative of the degree of compounding, the value of Example 1 is higher than the value of Example 2, whereas with respect to the average particle diameter, the value of Example 1 is lower than the value of Example 2. This result is considered to be caused not by the difference in the degree of compounding but by the difference in the ratio of Rh.

Furthermore, it is understood from Fig. 5 that in the region of 52.0 nm or less which is the average particle diameter of Example 1, that is, in the region of Rh/(Pd+Rh) of 0.5 at% or more and 6.5 at% or less, grain growth is suppressed.

<<Evaluation of Exhaust Gas Purifying Ability>>

Evaluation of the exhaust gas purifying ability was performed by measuring the amounts of HC and CO purified by each catalyst (i.e., the increased quantities of $H_2O$ and $CO_2$) by means of an FT-IR analyzer when the exhaust gas purifying catalysts of Examples 1 to 3, Comparative Examples 1 and 2, and Reference Example were exposed to a test gas.

Specifically, 3.0 g of the exhaust gas purifying catalyst was collected and set in a flow reactor, and the test gas was exposed to the catalyst at a flow rate of 15 (L/min) (SV=200,000 $h^{-1}$). At this time, while elevating the temperature of the catalyst from 100°C up to 500°C at a temperature rise rate of 20 (°C/min), the purification rates (%) of HC and CO relative to the temperature (°C) of the catalyst were recorded. The results are shown in Table 4 and Fig. 6.

[Table 4]

Table 4

| | Comparative Example 1 | Example 1 | Example 2 | Example 3 | Reference Example | Comparative Example 2 |
|---|---|---|---|---|---|---|
| Production process | coprecipitation | coprecipitation | coprecipitation | coprecipitation | coprecipitation | co-impregnation |
| Pd:Rh (molar ratio) | 100:0 | 99:1 | 97:3 | 95:5 | 93:7 | 95:5 |
| Rh/(Pd+Rh) (at%) | 0 | 1 | 3 | 5 | 7 | 5 |
| Absolute value (\|B-C\|) | $1.396 \times 10^{-3}$ | $0.261 \times 10^{-3}$ | $0.688 \times 10^{-3}$ | $1.020 \times 10^{-3}$ | $1.431 \times 10^{-3}$ | $1.578 \times 10^{-3}$ |
| Average particle diameter of fine particles (nm) | 53.1 | 52.0 | 40.3 | 42.0 | 54.8 | 55.8 |
| HC Purification rate at 500°C (%) | 89.1 | 90.0 | 92.5 | 93.1 | 90.3 | 89.5 |
| CO Purification rate at 500°C (%) | 82.1 | 83.6 | 87.6 | 88.7 | 84.1 | 83.5 |

22 EP 3 725 407 A1

Incidentally, the components constituting the test gas were CO: 0.65 vol%, $CO_2$: 10.00 vol%, $C_3H_6$: 3,000 ppmC (1,000 ppm), NO: 1,500 ppm, $O_2$: 0.70 vol%, $H_2O$: 3.00 vol%, and $N_2$ balance.

Fig. 6 illustrates the purification rates (%) of HC and CO at 500°C, regarding the exhaust gas purification catalysts of Examples 1 to 3 (Ex.1 to 3), Comparative Examples 1 and 2 (C.E. 1 and 2), and Reference Example. It is seen from Fig. 6 that compared with HC purification rates of Comparative Examples 1 and 2, the HC purification rates of Examples 1 to 3 and Reference Example are higher. The same holds true for the CO purification rate.

Furthermore, as seen from Fig .6, when HC purification rates of Example 3 (Ex.3) and Comparative Example 2 (C.E.2) each having a value of Rh/(Pd+Rh) of 5 are compared, the value of Example 3 is higher than the value of Comparative Example 2. This is considered to occur because the average particle diameter of fine composite metal particle contained in the exhaust gas purifying catalyst of Example 3 is smaller than that in Comparative Example 2. The same holds true for the CO purification rate. Incidentally, note that in general, when the particle diameter of fine particle is small, the number of active sites is increased with an increase in the specific surface area and in turn, the exhaust gas purifying ability is enhanced.

<<Evaluation 2>>

With respect to the exhaust gas purifying catalysts of Example 3 and Comparative Example 1, the particle diameter after 524D of thermal endurance test was evaluated. The evaluation was specifically performed by, with respect to fine particles contained in the exhaust gas purifying catalysts of Example 3 and Comparative Example 1 before and after thermal endurance test, photographing fine particles by means of a transmission electron microscope (TEM), and measuring the fine particles in the TEM image for the equivalent-circle diameter (Heywood diameter). The results are shown in Table 5 below and Fig. 7.

[Table 5]

Table 5

| Measurement Point | Before Endurance Test | | After Endurance Test | |
|---|---|---|---|---|
| | Particle Diameter of Comparative Example 1 (nm) | Particle Diameter of Example 3 (nm) | Particle Diameter of Comparative Example 1 (nm) | Particle Diameter of Example 3 (nm) |
| 1 | 2.45 | 2.65 | 149.00 | 103.40 |
| 2 | 2.70 | 2.30 | 128.85 | 112.35 |
| 3 | 3.45 | 3.35 | 119.00 | 25.90 |
| 4 | 4.20 | 4.35 | 97.85 | 73.45 |
| 5 | 2.80 | 2.35 | 68.80 | 88.30 |
| 6 | - | - | 55.70 | 74.10 |
| 7 | - | - | 95.75 | 88.50 |
| 8 | - | - | 85.80 | 92.70 |
| 9 | - | - | 54.05 | 99.45 |
| 10 | - | - | 39.15 | 9.65 |
| 11 | - | - | 26.50 | 38.40 |
| 12 | - | - | 39.20 | 26.90 |
| 13 | - | - | 14.15 | 15.90 |
| 14 | - | - | 8.45 | 9.45 |
| 15 | - | - | 17.85 | 13.30 |
| 16 | - | - | 8.65 | 6.65 |
| 17 | - | - | 24.75 | 7.85 |

(continued)

| Measurement Point | Before Endurance Test | | After Endurance Test | |
|---|---|---|---|---|
| | Particle Diameter of Comparative Example 1 (nm) | Particle Diameter of Example 3 (nm) | Particle Diameter of Comparative Example 1 (nm) | Particle Diameter of Example 3 (nm) |
| 18 | - | - | 10.20 | 12.50 |
| 19 | - | - | 10.55 | 17.80 |
| 20 | - | - | 49.50 | 39.20 |
| Average | 3.12 | 3.00 | 55.1875 | 47.7875 |

Fig. 7(a) is a transmission electron microscope (TEM) image of the exhaust gas purifying catalyst of Comparative Example 1 after thermal endurance test, and Fig. 7(b) is a TEM image of the exhaust gas purifying catalyst of Example 3 after thermal endurance test. In Table 5, each of the particle diameters at measurement point 1 of Comparative Example 1 and Example 3 is the particle diameter of fine particle measured in Fig. 7(a) and (b).

It is seen from Table 5 that the average particle diameters of Comparative Example 1 and Example 3 before endurance test are about 3 nm. In addition, it is understood from Table 5 that the average particle diameter of Comparative Example 1 after endurance test is 55.1875 nm and compared with the average particle diameter before endurance test, the grain growth rate is 1,768.8%. Furthermore, it is understood from Table 5 that the average particle diameter of Example 3 after endurance test is 47.7875 nm and compared with the average particle diameter before endurance test, the grain growth rate is 1,592.9%. That is, the grain growth rate of Example 3 is smaller than that of Comparative Example 1.

These facts suggest that the exhaust gas purifying catalyst of Example 3 is thermally stable, in which Rh relatively insusceptible to grain growth is compounded with Pd relatively susceptible to grain growth and grain growth of fine composite metal particles was thereby suppressed.

<<Examples A1 to A8 and Comparative Examples A1 to A7>>

In the following, the exhaust gas purifying catalyst devices of Examples A1 to A8 and Comparative Examples A1 to A7, where a substrate, a lower catalyst layer and an upper catalyst layer are formed in this order, are manufactured and evaluated, and the optimal position to which the fine composite metal particle is applied under high temperature conditions, the amount thereof, etc. are studied.

Furthermore, in the following, the unit "g/L" means the mass (g) of the material supported per L of the volume of the substrate. For example, fine Rh metal particle 0.2 g/L means that the mass of the fine Rh metal particle per L of the volume of the substrate is 0.2 g.

«Preparation»

- Support Particle 1 (La-Al composite oxide)
  4 mass%-$La_2O_3$-added $Al_2O_3$ composite oxide (produced by Sasol)
- Support Particle 2 (LaY-ACZ composite oxide)
  4 mass%-$La_2O_3$ and 4 mass%-$Y_2O_3$-added 30 mass%-$Al_2O_3$, 27 mass%-$CeO_2$, and 35 mass%-$ZrO_2$ composite oxide (produced by Solvay)
- Support Particle 3 (NdLaY-ACZ composite oxide)
  2 mass%-$Nd_2O_3$, 2 mass%-$La_2O_3$, and 2 mass%-$Y_2O_3$-added 30 mass%-$Al_2O_3$, 20 mass%-$CeO_2$, and 44 mass%-$ZrO_2$ composite oxide (produced by Daiichi Kigenso Kagaku Kogyo Co., Ltd.)
- Pd-Rh Mixed solution
  Pd-Rh mixed solution (Pd:Rh=95:5) manufactured in "Mixed Solution Preparation Step" of Example 3.
- Substrate
  A cordierite-made honeycomb substrate of 875 ml, 600 cells, and 2.0 mil.

<<Comparative Example Al>>

<Preparation of Lower Catalyst Layer>

Support Particle 1, Support Particle 2, barium sulfate, and an $Al_2O_3$-based binder were added to distilled water put under stirring to prepare a lower catalyst layer slurry. The slurry was then cast on the cordierite-made honeycomb substrate (Material 5), and the excess slurry was blown off by applying a blower thereto to coat the substrate with the lower catalyst layer slurry. The coating amount was adjusted to include Support Particle 1: 40 g, Support Particle 2: 45 g, barium sulfate: 5 g, and $Al_2O_3$-based binder: 5 g, per L of the cordierite-made honeycomb substrate.

The substrate coated with the lower catalyst layer slurry was dried at 120°C over 2 hours and fired at 500°C over 2 hours to prepare a cordierite-made honeycomb substrate having formed thereon a lower catalyst layer.

<Preparation of Upper Catalyst Layer>

Support Particle 3 was impregnated with an Rh nitrate solution to prepare Rh-Supported Support Particle 3. Subsequently, Rh-Supported Support Particle 3, Support Particle 1, Support Particle 2, and an $Al_2O_3$-based binder were added to distilled water put under stirring to prepare an upper catalyst layer slurry. The slurry was then cast on the cordierite-made honeycomb substrate having formed thereon the lower catalyst layer, and the excess slurry was blown off by applying a blower thereto to coat the substrate with the upper catalyst layer slurry. The coating amount was adjusted to include Support Particle 1: 63 g, Support Particle 2: 38 g, and Rh-Supported Support Particle 3: 72 g (Rh: 0.2 g), per L of the cordierite-made honeycomb substrate.

The substrate coated with the upper catalyst layer slurry was dried at 120°C over 2 hours and fired at 500°C over 2 hours, and a cordierite-made honeycomb substrate having formed thereon an upper catalyst layer and a lower catalyst layer, i.e., the exhaust gas purifying catalyst device of Comparative Example A1, was thereby prepared.

In the following, the difference between the production step of the exhaust gas purifying catalyst devices of Examples A1 to A8 and Comparative Examples A2 to A7 and the production step of the exhaust gas purifying catalyst device of Comparative Example A1 is described. For details of the amounts of materials used in the production, please refer to Tables 6 to 8 below.

<<Example A1>>

The exhaust gas purifying catalyst device of Example A1 was prepared in the same manner as in Comparative Example A1 except that in the "Preparation of Upper Catalyst Layer" of Comparative Example A1, the Pd-Rh mixed solution was impregnated into Support Particle 2 and fired.

<<Examples A2 to A6>>

The Pd-Rh mixed solution was impregnated into the surface of the upper catalyst layer of the exhaust gas purifying catalyst device of Comparative Example A1 and fired to prepare the exhaust gas purifying catalyst devices of Examples A2 to A6. Specifically, the Pd-Rh mixed solution was impregnated and furthermore, the exhaust gas purifying catalyst device of Comparative Example A1 was dried at 120°C over 2 hours and fired at 500°C over 2 hours.

The exhaust gas purifying catalyst devices of Examples A2 to A6 are different in the amount of the fine Pd-Rh composite metal particle supported.

<<Comparative Examples A2 to A6>>

A Pd nitrate solution was impregnated into the surface of the upper catalyst layer of the exhaust gas purifying catalyst device of Comparative Example A1 to prepare the exhaust gas purifying catalyst devices of Comparative Examples A2 to A6. Specifically, a Pd nitrate solution was further impregnated into the exhaust gas purifying catalyst device of Comparative Example A1, dried at 120°C over 2 hours and fired at 500°C over 2 hours.

The exhaust gas purifying catalyst devices of Comparative Examples A2 to A6 are different in the amount of the fine Pd metal particle supported.

<<Comparative Example A7>>

A Pd nitrate solution and an Rh nitrate solution were impregnated into the surface of the upper catalyst layer of the exhaust gas purifying catalyst device of Comparative Example A1 and fired to prepare the exhaust gas purifying catalyst device of Comparative Example A7. Specifically, a Pd nitrate solution was further impregnated into the exhaust gas purifying catalyst device of Comparative Example A1 and dried at 120°C over 2 hours, and furthermore, an Rh nitrate solution was impregnated into the surface of the upper catalyst layer of the resulting exhaust gas purifying catalyst device, dried at 120°C over 2 hours and fired at 500°C over 2 hours.

<<Example A7>>

The exhaust gas purifying catalyst device of Example A7 was prepared in the same manner as in Comparative Example A1 except that in the "Preparation of Lower Catalyst Layer" of Comparative Example A1, the Pd-Rh mixed solution was impregnated into Support Particle 2.

<<Example A8>>

The Pd-Rh mixed solution was impregnated into the surface of the upper catalyst layer of the exhaust gas purifying catalyst device of Comparative Example A1 and fired to prepare the exhaust gas purifying catalyst device of Example A8. Specifically, a Pd-Rh mixed solution of which pH is adjusted was used. The adsorptivity of Pd-Rh composite oxide, etc. is reduced by adjusting the pH of the mixed solution, as a result, the depth at which the composite hydroxide is supported can be made deeper than the depth in Example A3. Here, the depth means the depth in the stacking direction from the surface of the upper catalyst layer.

Configurations of the exhaust gas purifying catalyst devices of Examples A1 to A8 and Comparative Examples A1 to A7 are shown in Tables 6 to 8 below. In the exhaust gas purifying catalyst devices of these working examples, the total amount of Rh was adjusted to be 0.2 g/L.

[Table 6]

Table 6

| | | | | Example A1 | Example A2 | Example A3 | Example A4 | Example A5 | Example A6 |
|---|---|---|---|---|---|---|---|---|---|
| Upper layer catalyst (surface) | Catalyst metal | Fine Pd metal particle | Pd (g/L) | - | - | - | - | - | - |
| | | Fine Rh metal particle | Rh (g/L) | - | - | - | - | - | - |
| | | Fine Pd-Rh composite metal particle | Pd (g/L) | - | 0.100 | 0.240 | 0.500 | 0.800 | 1.050 |
| | | | Rh (g/L) | - | 0.005 | 0.013 | 0.026 | 0.042 | 0.055 |
| Upper catalyst layer | Support Particle 1 | La-Al composite oxide (g/L) | | 63.000 | 63.000 | 63.000 | 63.000 | 63.000 | 63.000 |
| | Support Particle 2 and catalyst metal | LaY-ACZ composite oxide (g/L) | | 37.747 | 38.000 | 38.000 | 38.000 | 38.000 | 38.000 |
| | | Fine Pd metal particle Pd (g/L) | | - | - | - | - | - | - |
| | | Fine Pd-Rh composite metal particle | Pd (g/L) | 0.240 | - | - | - | - | - |
| | | | Rh (g/L) | 0.013 | - | - | - | - | - |
| | Support Particle 3 and catalyst metal | NdLaY-ACZ composite oxide (g/L) | | 71.813 | 71.805 | 71.813 | 71.826 | 71.842 | 71.855 |
| | | Fine Rh metal particle | Rh (g/L) | 0.187 | 0.195 | 0.187 | 0.174 | 0.158 | 0.145 |

(continued)

| | | | Example A1 | Example A2 | Example A3 | Example A4 | Example A5 | Example A6 |
|---|---|---|---|---|---|---|---|---|
| Lower catalyst layer | Support Particle 1 | La-Al composite oxide (g/L) | 40.000 | 40.000 | 40.000 | 40.000 | 40.000 | 40.000 |
| | Support Particle 2 and catalyst metal | LaY-ACZ composite oxide (g/L) | 45.000 | 45.000 | 45.000 | 45.000 | 45.000 | 45.000 |
| | | Fine Pd metal particle — Pd (g/L) | - | - | - | - | - | - |
| | | Fine Pd-Rh composite metal particle — Pd (g/L) | - | - | - | - | - | - |
| | | Fine Pd-Rh composite metal particle — Rh (g/L) | - | - | - | - | - | - |
| | Sintering inhibitor | Barium sulfate (g/L) | 5.000 | 5.000 | 5.000 | 5.000 | 5.000 | 5.000 |
| | Binder | $Al_2O_3$-based binder (g/L) | 5.000 | 5.000 | 5.000 | 5.000 | 5.000 | 5.000 |
| Substrate | cordierite-made honeycomb substrate of 875 ml, 600 cells, and 2.0 mil | | | | | | | |

[Table 7]

Table 7

| | | | | Example A7 | Example A8 |
|---|---|---|---|---|---|
| Upper catalyst layer (surface) | Catalyst metal | Fine Pd metal particle | Pd (g/L) | - | - |
| | | Fine Rh metal particle | Rh (g/L) | - | - |
| | | Fine Pd-Rh composite metal particle | Pd (g/L) | - | 0.240 |
| | | | Rh (g/L) | - | 0.013 |
| Upper catalyst layer | Support Particle 1 | La-Al composite oxide (g/L) | | 63.000 | 63.000 |
| | Support Particle 2 and catalyst metal | LaY-ACZ composite oxide (g/L) | | 38.000 | 38.000 |
| | | Fine Pd metal particle | Pd (g/L) | - | - |
| | | Fine Pd-Rh composite metal particle | Pd (g/L) | - | - |
| | | | Rh (g/L) | - | - |
| | Support Particle 3 and catalyst metal | NdLaY-ACZ composite oxide (g/L) | | 71.813 | 71.813 |
| | | Fine Rh metal particle | Rh (g/L) | 0.187 | 0.187 |
| Lower catalyst layer | Support Particle 1 | La-Al composite oxide (g/L) | | 40.000 | 40.000 |
| | Support Particle 2 and catalyst metal | LaY-ACZ composite oxide (g/L) | | 44.747 | 45.000 |
| | | Fine Pd metal particle | Pd (g/L) | - | - |
| | | Fine Pd-Rh composite | Pd (g/L) | 0.240 | - |
| | | metal particle | Rh (g/L) | 0.013 | - |
| | Sintering inhibitor | Barium sulfate (g/L) | | 5.000 | 5.000 |
| | Binder | $Al_2O_3$-based binder (g/L) | | 5.000 | 5.000 |
| Substrate | cordierite-made honeycomb substrate of 875 ml, 600 cells, and 2.0 mil | | | | |

[Table 8]

Table 8

| | | | | Comparative Example A1 | Comparative Example A2 | Comparative Example A3 | Comparative Example A4 | Comparative Example A5 | Comparative Example A6 | Comparative Example A7 |
|---|---|---|---|---|---|---|---|---|---|---|
| Upper catalyst layer (surface) | Catalyst metal | Fine Pd metal particle | Pd (g/L) | - | 0.100 | 0.240 | 0.500 | 0.800 | 1.050 | 0.240 |
| | | Fine Rh metal particle | Rh (g/L) | - | - | - | - | - | - | 0.013 |
| | | Fine Pd-Rh composite metal particle | Pd (g/L) | - | - | - | - | - | - | - |
| | | | Rh (g/L) | - | - | - | - | - | - | - |
| Upper catalyst layer | Support Particle 1 | La-Al composite oxide (g/L) | | 63.000 | 63.000 | 63.000 | 63.000 | 63.000 | 63.000 | 63.000 |
| | | LaY-ACZ composite oxide (g/L) | | 38.000 | 38.000 | 38.000 | 38.000 | 38.000 | 38.000 | 38.000 |
| | Support Particle 2 and catalyst metal | Fine Pd metal particle | Pd (g/L) | - | - | - | - | - | - | - |
| | | Fine Pd-Rh composite metal particle | Pd (g/L) | - | - | - | - | - | - | - |
| | | | Rh (g/L) | - | - | - | - | - | - | |
| | Support Particle 3 and catalyst metal | NdLaY-ACZ composite oxide (g/L) | | 71.800 | 71.800 | 71.800 | 71.800 | 71.800 | 71.800 | 71.813 |
| | | Fine Rh metal particle | Rh (g/L) | 0.200 | 0.200 | 0.200 | 0.200 | 0.200 | 0.200 | 0.187 |

EP 3 725 407 A1

30

(continued)

| | | | Comparative Example A1 | Comparative Example A2 | Comparative Example A3 | Comparative Example A4 | Comparative Example A5 | Comparative Example A6 | Comparative Example A7 |
|---|---|---|---|---|---|---|---|---|---|
| Lower catalyst layer | Support Particle 1 | La-Al composite oxide (g/L) | 40.000 | 40.000 | 40.000 | 40.000 | 40.000 | 40.000 | 40.000 |
| | Support Particle 2 and catalyst metal | LaY-ACZ composite oxide (g/L) | 45.000 | 45.000 | 45.000 | 45.000 | 45.000 | 45.000 | 45.000 |
| | | Fine Pd metal particle Pd (g/L) | - | - | - | - | - | - | - |
| | | Fine Pd-Rh composite metal particle Pd | - | - | - | - | - | - | - |
| | | Rh (g/L) | - | - | - | - | - | - | - |
| | Sintering inhibitor | Barium sulfate (g/L) | 5.000 | 5.000 | 5.000 | 5.000 | 5.000 | 5.000 | 5.000 |
| | Binder | Al$_2$O$_3$-based binder (g/L) | 5.000 | 5.000 | 5.000 | 5.000 | 5.000 | 5.000 | 5.000 |
| Substrate | | | cordierite-made honeycomb substrate of 875 ml, 600 cells, and 2.0 mil | | | | | | |

# EP 3 725 407 A1

In addition, configurations of the exhaust gas purifying catalyst devices of Examples A1, A3 and A7 and Comparative Examples A1, A3 and A7 are shown in Table 9 below in a simplified manner. Specifically, in Table 9, only the adding position and amount added of the catalyst metal and the state of the catalyst metal are shown.

[Table 9]

Table 9

| | Adding Position of Catalyst Metal | | | | | | | | |
|---|---|---|---|---|---|---|---|---|---|
| | Lower Catalyst Layer | | | Upper Catalyst Layer | | | Surface of Upper Catalyst Layer | | |
| | Pd (g/L) | Rh (g/L) | State | Pd (g/L) | Rh (g/L) | State | Pd (g/L) | Rh (g/L) | State |
| Comparative Example A1 | - | - | - | - | 0.200 | fine element particle | - | - | - |
| | - | - | - | - | - | - | - | - | - |
| Example A1 | - | - | - | 0.240 | 0.013 | fine composite particle | - | - | - |
| | - | - | - | - | 0.187 | fine element particle | - | - | - |
| Example A3 | - | - | - | - | 0.187 | fine element particle | 0.240 | 0.013 | fine composite particle |
| | - | - | - | - | - | - | - | - | - |
| Comparative Example A3 | - | - | - | - | 0.200 | fine element particle | 0.240 | - | fine element particle |
| | - | - | - | - | - | - | - | - | - |
| Comparative Example A7 | - | - | - | - | 0.187 | fine element particle | 0.240 | - | physical mixing |
| | - | - | - | - | - | - | - | 0.013 | |
| Example A7 | 0.240 | 0.013 | fine composite particle | - | 0.187 | fine element particle | - | - | - |
| | - | - | - | - | - | - | - | - | - |

Note here that in the upper catalyst layer of Table 9, when Rh (g/L) is 0.200 or 0.187, the catalyst metal is supported not on Support Particle 2 but on Support Particle 3.

Furthermore, in Table 9, the "fine element particle" means a state where a fine metal particle of single element of Pd or Rh is supported on the support particle, the "fine composite particle" means a state where a fine composite metal particle of Pd and Rh is supported on the support particle, and the "physical mixing" means a state where a fine metal particle of single element of Pd and a fine metal particle of single element of Rh are mixed.

32

<<Evaluation 3>>

With respect to the exhaust gas purifying catalyst devices of respective working examples, after endurance test was performed, the total hydrocarbon (THC: Total HydroCarbons) purification rate at 500°C generally subject to diffusion rate limiting was measured. In addition, an EPMA image of a cross-section of each of the exhaust gas purifying catalyst devices of Examples A1, A3 and A8 was photographed, and the Pd element distribution was evaluated.

<Endurance Test>

The endurance test was performed by attaching the exhaust gas purifying catalyst device of each working example to an exhaust system of a V-8 cylinder engine, flowing exhaust gases of stoichiometric and rich atmospheres with a predetermined duration ratio (3:1) at a catalyst floor temperature of 950°C over 50 hours, which was taken as one cycle, and repeating the cycle.

<Measurement of THC Purification Rate at 500°C>

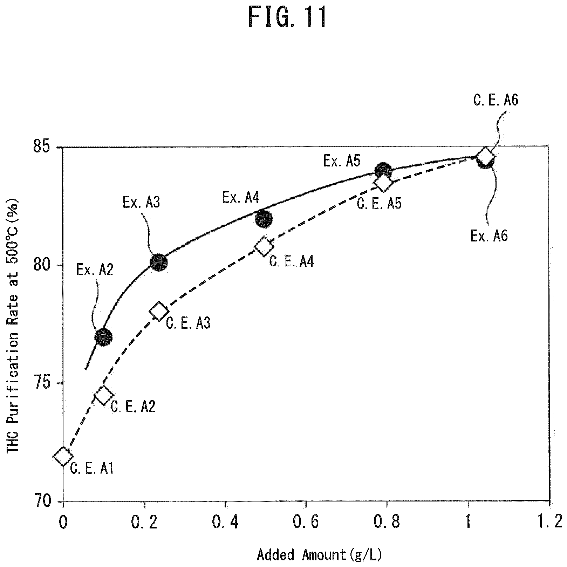

After the endurance test, an exhaust gas of a weakly rich air/fuel ratio (A/F) of 14.4 was fed to the exhaust gas purifying catalyst device of each working example, and the THC % purification rate at 500°C was measured. Incidentally, a measuring apparatus of apparatus name: HORIBA MOTOR EXHAUST GAS ANALYZER and mode: MEXA-7500 was used, and the flow velocity (Ga) of the exhaust gas was 35 g/s.
The results of measurement of THC purification rate at 500°C are shown in Figs. 10 and 11.
Fig. 10 is a diagram illustrating the THC purification rate (%) at 500°C, regarding the exhaust gas purifying catalyst devices of Examples A1, A3 and A7 and Comparative Examples A1, A3 and A7.

(Consideration for THC Purification Rate of Fine Pd-Rh composite Metal Particle)

It is seen from Fig. 10 that the THC purification rate at 500°C in Example A7 (Ex.A7) containing the fine Pd-Rh composite metal particle in the lower catalyst layer is higher than that in Comparative Example A1 (C.E.A1) not containing the fine composite metal particle. This reveals that the exhaust gas purifying catalyst device of Example A7 containing a fine Pd-Rh composite metal particle insusceptible to grain growth efficiently purified THC.

(Consideration for Adding Position of Fine Pd-Rh Composite Metal Particle for Achieving Higher THC Purification Rate at 500°C: lower catalyst layer, upper catalyst layer, and surface of upper catalyst layer)

It is seen from Table 9 that the fine Pd-Rh composite metal particle is contained in the lower catalyst layer in Example A7, contained in the upper catalyst layer in Example A1, and contained in the surface of the upper catalyst layer in Example A3. Furthermore, it is seen from Fig. 10 that when the THC purification rate at 500°C is compared among Examples A7 (Ex.A7), A1 (Ex.A1) and A3 (Ex.A3), the THC purification rate at 500°C in Example A3 is higher.
This reveals that under high temperature conditions allowing the diffusion rate limiting to be achieved, a higher THC purification rate could be achieved by containing the fine Pd-Rh composite metal particle at a high concentration in the upper catalyst layer surface put into contact with the exhaust gas at highest frequency.

(Consideration for THC Purification Rate at 500°C on Surface of Upper Catalyst Layer Containing Fine Pd-Rh Composite Metal Particle, Fine Pd Metal Particle, or Mixture of Fine Pd Metal Particle and Fine Rh Metal Particle)

It is seen from Table 9 that the surface of the upper catalyst layer contains fine Pd-Rh composite metal particles in Example A3, the same layer contains fine Pd metal particles in Comparative Example A3, and fine Pd metal particles and fine Rh metal particles are contained as a mixture in Comparative Example A7.
It is seen from Fig 10 that when the THC purification rate at 500°C is compared among Example A3 (Ex.A3), Comparative Example A3 (C.E.A3) and Comparative Example A7 (C.E.A7), the THC purification rate at 500°C in Example A3 is higher. This reveals that the fine Pd-Rh composite metal particle insusceptible to grain growth at high temperatures has higher catalytic activity, compared with fine Pd metal particle or a physical mixture of fine Pd metal particle and fine Rh metal particle.
Fig. 11 is a diagram illustrating the relationship between the amount added (g/L) of Pd on the outermost surface and the THC purification rate (%) at 500°C, regarding the exhaust gas purifying catalyst devices of Examples A2 to A6 (Ex.A2 to Ex.A6) and Comparative Examples A1 to A6 (C.E.A1 to C.E.A6).

(Consideration for Relationship Between Amounts of Fine Pd Metal Particle and Fine Pd-Rh Composite Metal Particle on Surface of Upper Catalyst Layer and THC Purification Rate at 500°C)

It is seen from Fig. 11 that the THC purification rate at 500°C in Examples A2 to A6 each containing the fine Pd-Rh composite metal particle in the surface of the upper catalyst layer is higher than that in Comparative Examples A2 to A6 containing the fine Pd metal particle in the surface of the upper catalyst layer. This reveals that the fine Pd-Rh composite metal particle insusceptible to grain growth at high temperatures has higher catalytic activity, compared with the fine Pd metal particle. Incidentally, the amount of Pd metal in Examples A2 to A6 is the same as that in Comparative Examples A2 to A6, respectively.

It is also seen from Fig. 11 that the THC purification rate of Example A6 having a Pd metal amount of 1.050 g/L is substantially equal to that of Comparative Example A6 having the same Pd metal amount. In other words, it is understood that under high temperature conditions of 500°C, etc., when the fine Pd-Rh composite metal particle insusceptible to grain growth is contained in an amount of more than 0 g/L to 1.050 g/L in the upper catalyst layer surface put into contact with the exhaust gas at high frequency, a high THC purification rate is achieved.

Incidentally, the state of being supported on the surface of the upper catalyst layer indicates the following state. A cross-section of the catalyst coat layer is subjected to EPMA analysis, and the thickness allowing Pd to be detected from the surface relative to the thickness of the upper layer is defined as "upper layer supporting rate", that is, defined as

$$\text{upper layer supporting rate (\%)} = \text{thickness of upper layer coat/coat layer thickness allowing Pd to be detected from upper layer surface} \times 100$$

Then, from the relationship between the upper layer supporting rate and the THC purification rate at 500°C, a state of being supported with "an upper layer supporting rate of 35% or less" is regarded as a state of being supported on the surface of the upper catalyst layer.

<EPMA Analysis>

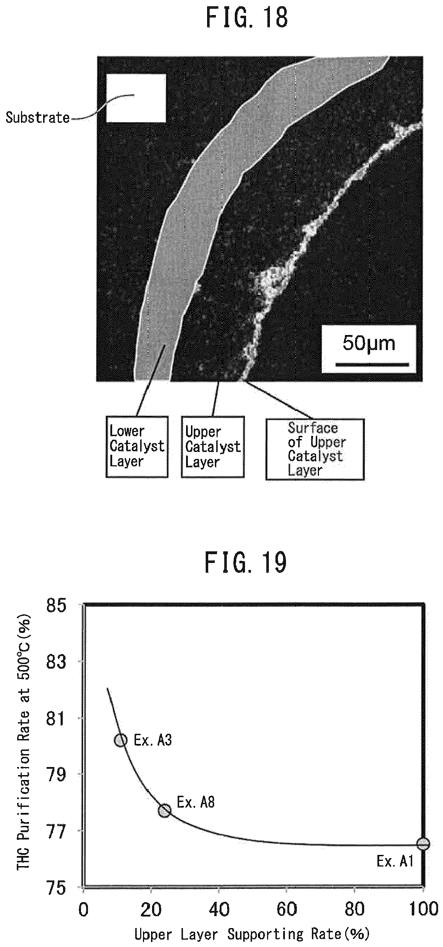

An EPMA image of a cross-section of each of the exhaust gas purifying catalyst devices of Examples A1, A3 and A8 was photographed, and the Pd element distribution was evaluated. The results are shown in Figs. 18 and 19.
Fig. 18 illustrates an electron probe microanalyzer (EPMA) image of a cross-section of the exhaust gas purifying catalyst device of Example A1. It is seen from Fig. 18 that Pd (white spot portions of the upper catalyst layer in Fig. 18) is distributed on the surface of the upper catalyst layer, and the layer in a portion where Pd is distribution has a thickness.
Fig. 19 is a diagram illustrating the relationship between the upper layer supporting rate (%) and the THC purification rate (%) at 500°C, regarding the exhaust gas purifying catalyst devices of Examples A1, A3 and A8.
From the line connecting Examples A1, A3 and A8 of Fig. 19, it is seen that as the upper layer supporting rate is lower, the THC purification rate at 500°C is enhanced.

<<Examples B1 to B6 and Comparative Examples B1 to B8>>

In the following, the exhaust gas purifying catalyst devices of Examples B1 to B6 and Comparative Examples B1 to B8, where a substrate, a lower catalyst layer and an upper catalyst layer are formed in this order, are manufactured and evaluated, and the optimal position to which the fine composite metal particle is applied under low temperature conditions, the amount thereof, etc. are studied.

«Preparation»

- Support Particle 1 (La-Al composite oxide)
  Support Particle 1 was prepared in the same manner as that used in the paragraph "Preparation" of Examples A1 to A8 and Comparative Examples A1 to A7.
- Support Particle 2 (LaY-ACZ composite oxide)
  Support Particle 2 was prepared in the same manner as that used in the paragraph "Preparation" of Examples A1 to A8 and Comparative Examples A1 to A7.
- Support Particle 3 (NdLaY-ACZ composite oxide)
  Support Particle 3 was prepared in the same manner as that used in the paragraph "Preparation" of Examples A1 to A8 and Comparative Examples A1 to A7.

- Pd-Rh Mixed solution
  A Pd-Rh mixed solution was prepared in the same manner as that used in the paragraph "Preparation" of Examples A1 to A8 and Comparative Examples A1 to A7.
- Substrate
  The same substrate as that used in the paragraph "Preparation" of Examples A1 to A8 and Comparative Examples A1 to A7 was used.

<<Comparative Example B1>>

<Preparation of Lower Catalyst Layer>

Support Particle 1, Support Particle 2, barium sulfate, and an $Al_2O_3$-based binder were added to distilled water put under stirring to prepare a lower catalyst layer slurry. The slurry was then cast on the cordierite-made honeycomb substrate (Material 5), and the excess slurry was blown off by applying a blower thereto to coat the substrate with the lower catalyst layer slurry. The coating amount was adjusted to include Support Particle 1: 40 g, Support Particle 2: 45 g, barium sulfate: 5 g, and $Al_2O_3$-based binder: 5 g, per L of the cordierite-made honeycomb substrate.
The substrate coated with the lower catalyst layer slurry was dried at 120°C over 2 hours and fired at 500°C over 2 hours to prepare a cordierite-made honeycomb substrate having formed thereon a lower catalyst layer.

<Preparation of Upper Catalyst Layer>

Support Particle 3 was impregnated with an Rh nitrate solution to prepare Rh-Supported Support Particle 3. Subsequently, Rh-Supported Support Particle 3, Support Particle 1, Support Particle 2, and an $Al_2O_3$-based binder were added to distilled water put under stirring to prepare an upper catalyst layer slurry. The slurry was then cast on the cordierite-made honeycomb substrate having formed thereon the lower catalyst layer, and the excess slurry was blown off by applying a blower thereto to coat the substrate with the upper catalyst layer slurry. The coating amount was adjusted to include Support Particle 1: 63 g, Support Particle 2: 38 g, and Rh-Supported Support Particle 3: 72 g (Rh: 0.2 g), per L of the cordierite-made honeycomb substrate.
The substrate coated with the upper catalyst layer slurry was dried at 120°C over 2 hours and fired at 500°C over 2 hours, and a cordierite-made honeycomb substrate having formed thereon an upper catalyst layer and a lower catalyst layer, i.e., the exhaust gas purifying catalyst device of Comparative Example B1, was thereby prepared.
In the following, the difference between the production step of the exhaust gas purifying catalyst devices of Examples B1 to B6 and Comparative Examples B2 to B8 and the production step of the exhaust gas purifying catalyst device of Comparative Example B1 is described. For details of the amounts of materials used in the production, please refer to Tables 10 and 11 below.

<<Example B1>>

The exhaust gas purifying catalyst device of Example B1 was prepared in the same manner as in Comparative Example B1 except that in the "Preparation of Lower Catalyst Layer" of Comparative Example B1, the Pd-Rh mixed solution was impregnated into Support Particle 2 and fired and in the "preparation of Upper Catalyst Layer", the amount of the catalyst metal Rh of the Support Particle 3 was changed.

<<Comparative Example B2>>

The exhaust gas purifying catalyst device of Comparative Example B2 was prepared in the same manner as in Comparative Example B1 except that in the "Preparation of Lower Catalyst Layer" of Comparative Example B1, a Pd nitrate solution was impregnated into Support Particle 2 and fired. Incidentally, the amount of Pd in the Pd nitrate solution is 0.100 (g/L).

<<Examples B2 to B5>>

The exhaust gas purifying catalyst devices of Examples B2 to B5 were prepared in the same manner as in Comparative Example B1 except that in the "Preparation of Upper Catalyst Layer" of Comparative Example B1, the Pd-Rh mixed solution was impregnated into Support Particle 2 and fired and in the "Preparation of Upper Catalyst Layer", the amount of catalyst metal Rh of Support Particle 3 was changed.

<<Comparative Example B3>>

The exhaust gas purifying catalyst device of Comparative Example B3 was prepared in the same manner as in Comparative Example B1 except that in the "Preparation of Upper Catalyst Layer" of Comparative Example B1, a Pd nitrate solution was impregnated into Support Particle 2 and fired; in the "Preparation of Upper Catalyst Layer", an Rh nitrate solution was impregnated into different Support Particle 2; and in the "Preparation of Upper Catalyst Layer", the amount of catalyst metal Rh of Support Particle 3 was changed.

<<Comparative Examples B4 to B7>>

The exhaust gas purifying catalyst devices of Comparative Examples B4 to B7 were prepared in the same manner as in Comparative Example B1 except that in the "Preparation of Upper Catalyst Layer" of Comparative Example B1, a Pd nitrate solution was impregnated into Support Particle 2 and fired.

<<Example B6>>

The exhaust gas purifying catalyst device of Example B6 was prepared in the same manner as in Comparative Example B1 except that the exhaust gas purifying catalyst device was prepared by changing the amount of catalyst metal Rh of Support Particle 3 in the "Preparation of Upper Catalyst Layer" of Comparative Example B1 and the Pd-Rh mixed solution was impregnated into the surfaced of the upper catalyst layer of this exhaust gas purifying catalyst device and fired.

<<Comparative Example B8>>

The exhaust gas purifying catalyst device of Comparative Example B8 was prepared in the same manner as in Comparative Example B1 except that a Pd solution was impregnated into the surface of the upper catalyst layer of the exhaust gas purifying catalyst device of Comparative Example B1 and this exhaust gas purifying catalyst device was fired.

Configurations of the exhaust gas purifying catalyst devices of Examples B1 to B6 and Comparative Examples B1 to B8 are shown in Tables 10 and 11 below. In the exhaust gas purifying catalyst devices of these working examples, the total amount of Rh was adjusted to 0.2 g/L.

[Table 10]

Table 10

| | | | | Example B1 | Example B2 | Example B3 | Example B4 | Example B5 | Example B6 | Comparative Example B1 |
|---|---|---|---|---|---|---|---|---|---|---|
| Upper catalyst layer (surface) | Catalyst metal | Fine Pd metal particle | Pd (g/L) | - | - | - | - | - | - | - |
| | | Fine Pd-Rh composite metal particle | Pd (g/L) | - | - | - | - | - | 0.100 | - |
| | | | Rh (g/L) | - | - | - | - | - | 0.005 | - |
| Upper catalyst layer | Support Particle 1 | La-Al composite oxide (g/L) | | 63.000 | 63.000 | 63.000 | 63.000 | 63.000 | 63.000 | 63.000 |
| | Support Particle 2 and catalyst metal | LaY-ACZ composite oxide (g/L) | | 38.000 | 37.895 | 37.789 | 37.474 | 36.789 | 38.000 | 38.000 |
| | | Fine Pd metal particle Pd (g/L) | | - | - | - | - | - | - | - |
| | | Fine Pd-Rh composite metal particle | Pd (g/L) | - | 0.100 | 0.200 | 0.500 | 1.150 | - | - |
| | | | Rh (g/L) | - | 0.005 | 0.011 | 0.026 | 0.061 | - | - |
| | Different Support Particle 2 and catalyst metal | LaY-ACZ composite oxide (g/L) | | - | - | - | - | - | - | - |
| | | Fine Rh metal particle | Rh (g/L) | - | - | - | - | - | - | - |
| | Support Particle 3 and catalyst metal | NdLaY-ACZ composite oxide (g/L) | | 71.805 | 71.805 | 71.811 | 71.826 | 71.861 | 71.805 | 71.800 |
| | | Fine Rh metal particle | Rh (g/L) | 0.195 | 0.195 | 0.189 | 0.174 | 0.139 | 0.195 | 0.200 |

EP 3 725 407 A1

(continued)

| | | | | Example B1 | Example B2 | Example B3 | Example B4 | Example B5 | Example B6 | Comparative Example B1 |
|---|---|---|---|---|---|---|---|---|---|---|
| Lower catalyst layer | Support Particle 1 | La-Al composite oxide (g/L) | | 40.000 | 40.000 | 40.000 | 40.000 | 40.000 | 40.000 | 40.000 |
| | Support Particle 2 and catalyst metal | LaY-ACZ composite oxide (g/L) | | 44.895 | 45.000 | 45.000 | 45.000 | 45.000 | 45.000 | 45.000 |
| | | Fine Pd metal particle | Pd (g/L) | - | - | - | - | - | - | - |
| | | Fine Pd-Rh composite metal particle | Pd (g/L) | 0.100 | - | - | - | - | - | - |
| | | | Rh (g/L) | 0.005 | - | - | - | - | - | - |
| | Sintering inhibitor | Barium sulfate (g/L) | | 5.000 | 5.000 | 5.000 | 5.000 | 5.000 | 5.000 | 5.000 |
| | Binder | $Al_2O_3$-based binder (g/L) | | 5.000 | 5.000 | 5.000 | 5.000 | 5.000 | 5.000 | 5.000 |
| Substrate | cordierite-made honeycomb substrate of 875 ml, 600 cells, and 2.0 mil | | | | | | | | | |

[Table 11]

Table 11

| | | | | Comparative Example B2 | Comparative Example B3 | Comparative Example B4 | Comparative Example B5 | Comparative Example B6 | Comparative Example B7 | Comparative Example B8 |
|---|---|---|---|---|---|---|---|---|---|---|
| Upper catalyst layer (surface) | Catalyst metal | Fine Pd metal particle | Pd (g/L) | - | - | - | - | - | - | 0.100 |
| | | Fine Pd-Rh composite metal particle | Pd (g/L) | - | - | - | - | - | - | - |
| | | | Rh (g/L) | - | - | - | - | - | - | - |
| Upper catalyst layer | Support Particle 1 | La-A1 composite oxide (g/L) | | 63.000 | 63.000 | 63.000 | 63.000 | 63.000 | 63.000 | 63.000 |
| | Support Particle 2 and catalyst metal | LaY-ACZ composite oxide (g/L) | | 38.000 | 35.900 | 37.900 | 37.800 | 37.500 | 36.850 | 38.000 |
| | | Fine Pd metal particle | Pd (g/L) | - | 0.100 | 0.100 | 0.200 | 0.500 | 1.150 | - |
| | | Fine Pd-Rh composite metal particle | Pd (g/L) | - | - | - | - | - | - | - |
| | | | Rh (g/L) | - | - | - | - | - | - | - |
| | Different Support Particle 2 and catalyst metal | LaY-ACZ composite oxide (g/L) | | - | 1.995 | - | - | - | - | - |
| | | Fine Rh metal particle | Rh (g/L) | - | 0.005 | - | - | - | - | - |

(continued)

| | | | Comparative Example B2 | Comparative Example B3 | Comparative Example B4 | Comparative Example B5 | Comparative Example B6 | Comparative Example B7 | Comparative Example B8 |
|---|---|---|---|---|---|---|---|---|---|
| | Support Particle 3 and catalyst metal | NdLaY-ACZ composite oxide (g/L) | 71.800 | 71.805 | 71.800 | 71.800 | 71.800 | 71.800 | 71.800 |
| | | Fine Rh metal particle | Rh (g/L) | 0.200 | 0.195 | 0.200 | 0.200 | 0.200 | 0.200 | 0.200 |
| Lower catalyst layer | Support Particle 1 | La-A1 composite oxide (g/L) | 40.000 | 40.000 | 40.000 | 40.000 | 40.000 | 40.000 | 40.000 |
| | Support Particle 2 and catalyst metal | LaY-ACZ composite oxide (g/L) | 44.900 | 45.000 | 45.000 | 45.000 | 45.000 | 45.000 | 45.000 |
| | | Fine Pd metal particle | Pd (g/L) | 0.100 | - | - | - | - | - | - |
| | | Fine Pd-Rh composite metal particle | Pd (g/L) | - | - | - | - | - | - | - |
| | | | Rh (g/L) | - | - | - | - | - | - | - |
| | Sintering inhibitor | Barium sulfate (g/L) | 5.000 | 5.000 | 5.000 | 5.000 | 5.000 | 5.000 | 5.000 |
| | Binder | Al$_2$O$_3$-based binder (g/L) | 5.000 | 5.000 | 5.000 | 5.000 | 5.000 | 5.000 | 5.000 |
| Substrate | | cordierite-made honeycomb substrate of 875 ml, 600 cells, and 2.0 mil | | | | | | | |

In addition, configurations of the exhaust gas purifying catalyst devices of Examples B1, B2 and B6 and Comparative Examples B1 to B4 and B8 are shown in Table 12 below in a simplified manner. Specifically, in Table 12, only the adding position and amount added of the catalyst metal and the state of the catalyst metal are shown.

[Table 12]

Table 12

| | Adding Position of Catalyst Metal | | | | | | | | |
| --- | --- | --- | --- | --- | --- | --- | --- | --- | --- |
| | Lower Catalyst Layer | | | Upper Catalyst Layer | | | Surface of Upper Catalyst Layer | | |
| | Pd (g/L) | Rh (g/L) | State | Pd (g/L) | Rh (g/L) | State | (g/L) | (g/L) | State |
| Comparative Example B1 | - | - | - | - | 0.200 | fine element particle | - | - | - |
| | - | - | - | - | - | - | - | - | - |
| Example B1 | 0.100 | 0.005 | fine composite particle | - | 0.195 | fine element particle | - | - | - |
| | - | - | - | - | - | - | - | - | - |
| Comparative Example B2 | 0.100 | - | fine element particle | - | 0.200 | fine element particle | - | - | - |
| | - | - | - | - | - | - | - | - | - |
| Example B2 | - | - | - | 0.100 | 0.005 | fine composite particle | - | - | - |
| | - | - | - | - | 0.195 | fine element particle | - | - | - |
| Comparative Example B3 | - | - | - | 0.100 | 0.005 | physical mixing | - | - | - |
| | - | - | - | - | 0.195 | fine element particle | - | - | - |
| Comparative Example B4 | - | - | - | 0.100 | - | fine element particle | - | - | - |
| | - | - | - | - | 0.200 | fine element particle | - | - | - |
| Example B6 | - | - | - | - | 0.195 | fine element particle | 0.100 | 0.005 | fine composite particle |
| | - | - | - | - | - | - | - | - | - |

(continued)

| | Adding Position of Catalyst Metal | | | | | | | | |
|---|---|---|---|---|---|---|---|---|---|
| | Lower Catalyst Layer | | | Upper Catalyst Layer | | | Surface of Upper Catalyst Layer | | |
| | Pd (g/L) | Rh (g/L) | State | Pd (g/L) | Rh (g/L) | State | (g/L) | (g/L) | State |
| Comparative Example B8 | - | - | - | - | 0.200 | fine element particle | 0.100 | - | fine element particle |
| | - | - | - | - | - | - | - | - | - |

In Table 12, the "fine element particle" means a state where a fine metal particle of single element of Pd or Rh is supported on the support particle, the "fine composite particle" means a state where a fine composite metal particle of Pd and Rh is supported on the support particle, and the "physical mixing" means a state where a support particle having supported thereon a fine metal particle of single element of Pd and a support particle having supported thereon a fine metal particle of single element of Rh are mixed.

Note here that in Table 12, when Rh (g/L) is 0.200 or 0.195, the catalyst metal is supported not on Support Particle 2 but on Support Particle 3.

<<Evaluation 4>>

With respect to the exhaust gas purifying catalyst devices of respective working examples, after endurance test was performed, the total hydrocarbon (Total HydroCarbons: THC) 50% purification temperature was measured. In addition, the upper catalyst layer of each of the exhaust gas purifying catalyst devices of Example B2 and Comparative Example B4 was disintegrated, and a TEM image was photographed.

«Endurance Test»

The endurance test was performed using the same conditions and procedures as in "Endurance Test" of Evaluation 3.

<Measurement of THC 50% Purification Temperature>

After the endurance test, a weakly rich exhaust gas of an air/fuel ratio (A/F) of 14.4 was fed to the exhaust gas purifying catalyst device of each working example, and the THC 50% purification temperature was measured. Incidentally, a measuring apparatus of apparatus name: HORIBA MOTOR EXHAUST GAS ANALYZER and mode: MEXA-7500 was used, and the flow velocity (Ga) of the exhaust gas was 35 g/s.

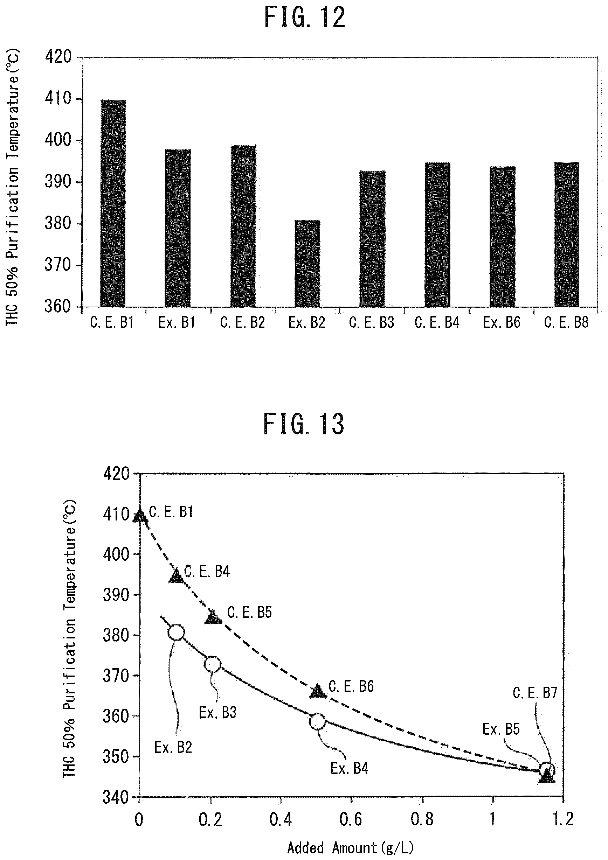

The results of measurement of THC 50% purification temperature are shown in Figs. 12 and 13.

Fig. 12 is a diagram illustrating the relationship between the exhaust gas purifying catalyst devices of Examples (Ex.) B1, B2 and B6 and Comparative Examples (C.E.) B1 to B4 and B8 and the THC 50% purification temperature (°C).

(Catalytic Activity of Fine Pd Metal Particle and Fine Pd-Rh Composite Metal Particle, Compared with Fine Rh Metal Particle)

It is seen from Fig. 12 that compared with the THC 50% purification temperature of the exhaust gas purifying catalyst device of Comparative Example B1 containing only fine Rh particles, the THC 50% purification temperature of the exhaust gas purifying catalyst devices of Examples B1, B2 and B6 and Comparative Examples B2 to B4 and B8 each containing fine Pd particles or fine Pd-Rh composite metal particles is lower. This reveals that the fine Pd particle or fine Pd-Rh composite metal particle has high catalytic activity catalyzing the total hydrocarbon oxidation reaction.

(Catalytic Activity of Fine Pd-Rh Composite Metal Particle in Lower Catalyst Layer)

It is also seen from Fig. 12 that the THC 50% purification temperature of Example B1 containing fine Pd-Rh composite metal particles in the lower catalyst layer is lower, compared with that of Comparative Example B2 containing fine Pd particles in the same layer. This reveals that the fine Pd-Rh composite metal particle insusceptible to grain growth has high catalytic activity catalyzing the total hydrocarbon oxidation reaction, compared with the fine Pd metal particle.

(Catalytic Activity of Fine Pd-Rh Composite Metal Particle in Upper Catalyst Layer)

Furthermore, it is seen from Fig. 12 that the THC 50% purification temperature of Example B2 containing fine Pd-Rh composite metal particles in the upper catalyst layer is lower, compared with those of Comparative Example B3 containing fine Pd metal particles or fine Rh metal particles in the same layer or Comparative Example B4 containing fine Pd metal particles. This is also considered to be attained due to high catalytic activity of the fine Pd-Rh composite metal particle insusceptible to grain growth.

(Catalytic Activity of Fine Pd-Rh Composite Metal Particle on Surface of Upper Catalyst Layer)

It is seen from Fig. 12 that the THC 50% purification temperature of Example B6 containing fine Pd-Rh composite metal particles in the surface of the upper catalyst layer is lower, compared with that of Comparative Example B8 containing fine Pd particles in the surface of the upper catalyst layer. This is also considered to be attained due to high catalytic activity of the fine Pd-Rh composite metal particle insusceptible to grain growth.
More specifically, it is understood from Fig. 12 that the THC 50% purification temperature of the exhaust gas purifying catalyst device of working examples containing fine Pd-Rh composite metal particles is lower, compared with those of working examples containing fine Pd metal particles.

(Consideration for Adding Position of Fine Pd-Rh Composite Metal Particle for Achieving Lower THC 50% Purification Temperature: lower catalyst layer, upper catalyst layer, and surface of upper catalyst layer)

It is seen from Fig. 12 that with respect to the exhaust gas purifying catalyst devices of Example B1 containing fine Pd-Rh composite metal particles in the lower catalyst layer, Example B2 containing the particles in the upper catalyst layer, and Example B6 containing the particles in the surface of the upper catalyst layer, Examples B2, B6 and B1 are sequenced in ascending order of the THC 50% purification temperature. More specifically, it is understood that the fine Pd-Rh composite metal particle exhibits high catalytic activity under low temperature conditions when it is contained in the upper catalyst layer (Example B2).
In general, under low temperature conditions not subject to diffusion rate limiting, an exhaust gas that could not be purified on the surface of the catalyst layer or at a shallow depth thereof diffuses deeply inside the catalyst layer. The result above reveals that in the exhaust gas purifying catalyst device of Example B2 where fine Pd-Rh composite metal particles insusceptible to grain growth are substantially uniformly dispersed in the upper catalyst layer, the fine Pd-Rh composite metal particle efficiently purified the exhaust gas.
Next, the THC 50% purification temperature of Examples B2 to B5 containing fine Pd-Rh composite metal particles in the upper catalyst layer is compared with that of Comparative Examples B4 to B7 containing fine Pd metal particles in the upper catalyst layer.
Fig. 13 is a diagram illustrating the relationship between the amount added (g/L) of Pd in the upper catalyst layer and the THC 50% purification temperature (°C), regarding the exhaust gas purifying catalyst devices of Examples B2 to B5 and Comparative Examples B1 and B4 to B7.

(Consideration for Relationship Between Amounts of Fine Pd Metal Particle and Fine Pd-Rh Composite Metal Particle and THC 50% Purification Temperature)

In Fig. 13, the amount (g/L) of Pd metal is the same in each of the combination of Example B2 and Comparative Example B4 (Pd: 0.1 g/L), the combination of Example B3 and Comparative Example B5 (Pd: 0.2 g/L), the combination of Example B4 and Comparative Example B6 (Pd: 0.5 g/L), and the combination of Example B5 and Comparative Example B7 (Pd: 1.15 g/L).
For example, with respect to the combination of Example B2 and Comparative Example B4, it is seen from Fig. 13 that the difference in the THC 50% purification temperature therebetween is about 15°C. It is also seen from Fig. 13 that as the amount of Pd metal increases, the difference in the THC 50% purification temperature in the combination above decreases.
In particular, for example, with respect to the combination of Example B5 and Comparative Example B7 having a large Pd metal amount (Pd: 1.15 g/L), the difference in the THC 50% purification temperature is about less than 1°C and is substantially nil.
This results reveals that both the fine Pd metal particle and the fine Pd-Rh composite metal particle exhibit high catalyst activity as the amounts thereof are large and therefore, when the amounts thereof are excessive, the fine Pd metal particle and the fine Pd-Rh composite metal particle are substantially not differentiated in the catalytic activity.

In contrast, when the amount of the fine Pd metal particle is small, the catalytic activity thereof is likely to be reduced, but on the other hand, when the amount of the fine Pd-Rh composite metal particle is small, the catalytic activity thereof is hardly reduced, as a result, it can be understood that as the amount of the fine Pd metal particle or the fine Pd-Rh composite metal particle is smaller, the difference in the catalytic activity therebetween is larger.

Next, the TEM analysis of the exhaust gas purifying catalyst devices of Example B2 and Comparative Example B4 was performed.

<TEM Analysis>

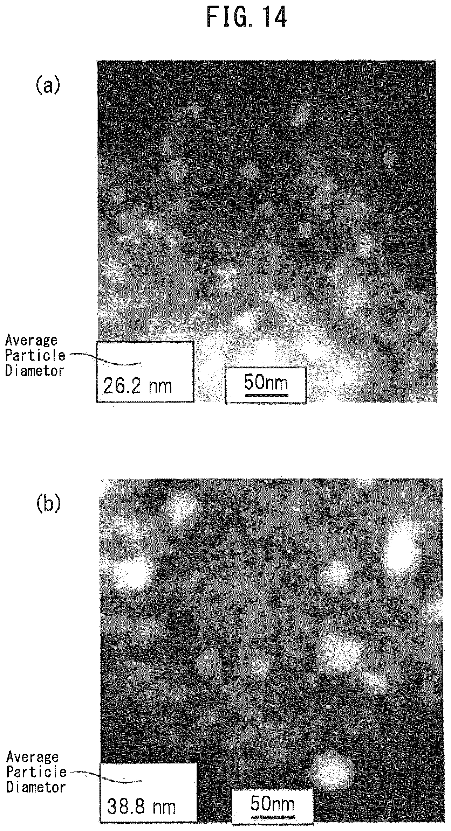

The upper catalyst layer of each of the exhaust gas purifying catalyst devices of Example B2 and Comparative Example B4 was disintegrated, and the particle diameter of the fine particle after thermal endurance test was evaluated. This evaluation was specifically performed by applying a transmission electron microscope (TEM) (JEM-ARM200F, manufactured by JEOL Ltd.) to the upper catalyst layer of each of the exhaust gas purifying catalyst devices of Example B2 and Comparative Example B4 after thermal endurance test, photographing fine particles, and measuring the fine particles in the TEM image for the equivalent-circle diameter (Heywood diameter). The results are shown in Fig. 14.

Figs. 14(a) and (b) are diagrams illustrating TEM images photographed after disintegrating the upper catalyst layers of the exhaust gas purifying catalyst devices of Example B2 and Comparative Example B4, respectively.

The TEM images of Figs. 14(a) and (b) respectively show that the average particle diameter of Example B2 is 26.2 nm and the average particle diameter of Comparative Example B4 is 38.8 nm. This reveals that grain growth is suppressed in the fine Pd-Rh composite metal particle of Example B2 and in turn, the average particle diameter thereof is smaller than the average particle diameter of Comparative Example B4.

It is understood that in Example B2, the average particle can be kept smaller than that of the conventional fine Pd metal particle and therefore, like the results of "Measurement of THC 50% Purification Temperature" above, high catalytic activity was exhibited under lower temperature conditions.

<<Examples C1 to C6 and Comparative Examples C1 to C3>>

In the following, the exhaust gas purifying catalyst devices of Examples C1 to C6 and Comparative Examples C1 to C3, where a substrate, a lower catalyst layer and an upper catalyst layer are formed in this order, are manufactured and evaluated, and the optimal position to which the ceria-based support particle having supported thereon fine composite metal particles is applied in the lower catalyst layer, the amount thereof, etc. are studied.

<<Preparation>>

- Support Particle 1 (La-A1 composite oxide)
  Support Particle 1 was prepared in the same manner as that used in the paragraph "Preparation" of Examples A1 to A8 and Comparative Examples A1 to A7.
- Support Particle 2 (LaY-ACZ composite oxide)
  Support Particle 2 was prepared in the same manner as that used in the paragraph "Preparation" of Examples A1 to A8 and Comparative Examples A1 to A7.
- Support Particle 3 (NdLaY-ACZ composite oxide)
  Support Particle 3 was prepared in the same manner as that used in the paragraph "Preparation" of Examples A1 to A8 and Comparative Examples A1 to A7.
- Pd-Rh Mixed solution
  A Pd-Rh mixed solution was prepared in the same manner as that used in the paragraph "Preparation" of Examples A1 to A8 and Comparative Examples A1 to A7.
- Substrate
  The same substrate as that used in the paragraph "Preparation" of Examples A1 to A8 and Comparative Examples A1 to A7 was used.

In the following, the "upstream end" means an inlet portion allowing the exhaust gas passing through the substrate to enter, and the "downstream end" means an outlet portion allowing the exhaust gas to exit from the substrate.

<<Comparative Example C1>>

<Preparation of Lower Catalyst Layer>

Support Particle 1, Support Particle 2, barium sulfate, and an $Al_2O_3$-based binder were added to distilled water put under stirring to prepare a lower catalyst layer slurry. The slurry was then cast on the cordierite-made honeycomb substrate (Material 5), and the excess slurry was blown off by applying a blower thereto to coat the substrate with the lower catalyst layer slurry.

The coating was performed by applying the viscosity-adjusted lower catalyst layer slurry to a region extending from upstream end to downstream end of the substrate, over 50% of the entire length thereof.

The coating amount was adjusted to include Support Particle 1: 40 g, Support Particle 2: 0 g, barium sulfate: 5 g, and $Al_2O_3$-based binder: 5 g, per L of the cordierite-made honeycomb substrate.

The substrate coated with the lower catalyst layer slurry was dried at 120°C over 2 hours and fired at 500°C over 2 hours to prepare a cordierite-made honeycomb substrate having formed thereon a lower catalyst layer.

<Preparation of Upper Catalyst Layer>

Support Particle 3 was impregnated with an Rh nitrate solution to prepare Rh-Supported Support Particle 3. Subsequently, Rh-Supported Support Particle 3, Support Particle 1, Support Particle 2, and an $Al_2O_3$-based binder were added to distilled water put under stirring to prepare an upper catalyst layer slurry. The slurry was then cast on the cordierite-made honeycomb substrate having formed thereon the lower catalyst layer, and the excess slurry was blown off by applying a blower thereto to coat the substrate with the upper catalyst layer slurry. The coating amount was adjusted to include Support Particle 1: 63 g, Support Particle 2: 35 g, and Rh-Supported Support Particle 3: 72 g (Rh: 0.2 g), per L of the cordierite-made honeycomb substrate.

The substrate coated with the upper catalyst layer slurry was dried at 120°C over 2 hours and fired at 500°C over 2 hours, and a cordierite-made honeycomb substrate having formed thereon an upper catalyst layer and a lower catalyst layer, i.e., the exhaust gas purifying catalyst device of Comparative Example C1, was thereby prepared.

In the following, the difference between the production step of the exhaust gas purifying catalyst devices of Examples C1 to C6 and Comparative Examples C2 and C3 and the production step of the exhaust gas purifying catalyst device of Comparative Example C1 is described. For details of the amounts of materials used in the production, please refer to Tables 13 and 14 below.

<<Example C1>>

The exhaust gas purifying catalyst device of Example C1 was prepared in the same manner as in Comparative Example C1 except that in the "Preparation of Lower Catalyst Layer" of Comparative Example C1, the amount of Support Particle 2 was changed, the Pd-Rh mixed solution was impregnated into Support Particle 2 and fired (total mass: 35 g/L) and the coating was performed by applying the viscosity-adjusted lower catalyst layer slurry to a region extending from downstream end to upstream end of the substrate, over 50% of the entire length thereof.

<<Examples C2 to C5>>

The exhaust gas purifying catalyst devices of Examples C2 to C5 were prepared in the same manner as in Comparative Example C1 except that in the "Preparation of Lower Catalyst Layer" of Comparative Example C1, the amount of Support Particle 2 was partially changed and the Pd-Rh mixed solution was impregnated into Support Particle 2 and fired (total mass: 10 g/L, 35 g/L, 50 g/L, and 85 g/L).

<<Comparative Example C2>>

The exhaust gas purifying catalyst device of Comparative Example C2 was prepared in the same manner as in Comparative Example C1 except that in the "Preparation of Lower Catalyst Layer" of Comparative Example C1, the amount of Support Particle 2 was changed and Pd nitrate was impregnated into Support Particle 2 and fired (total mass: 35 g/L).

<<Comparative Example C3>>

The exhaust gas purifying catalyst device of Comparative Example C3 was prepared in the same manner as in Comparative Example C1 except that in the "Preparation of Lower Catalyst Layer" of Comparative Example C1, the amount of Support Particle 2 was changed, Pd nitrate was impregnated into different Support Particle 2 and fired (total mass: 33.2 g/L), and Rh nitrate was impregnated into different Support Particle 2 and fired (total mass: 1.8 g/L).

<<Example C6>>

The exhaust gas purifying catalyst device of Example C6 was prepared in the same manner as in Comparative Example C1 except that in the "Preparation of Upper Catalyst Layer" of Comparative Example C1, the Pd-Rh mixed solution was impregnated into Support Particle 2 and fired (total mass: 35 g/L).
Configurations of the exhaust gas purifying catalyst devices of Examples C1 to C6 and Comparative Examples C1 to C3 are shown in Tables 13 and 14 below. In the exhaust gas purifying catalyst devices of these working examples, the total amount of Rh was adjusted to be 0.2 g/L.

[Table 13]

Table 13

| | | | | Example C1 | Example C2 | Example C3 | Example C4 | Example C5 | Example C6 |
|---|---|---|---|---|---|---|---|---|---|
| Upper catalyst (surface) | Catalyst metal | Fine Pd metal particle | Pd (g/L) | - | - | - | - | - | - |
| | | Fine Pd-Rh composite metal particle | Pd (g/L) | - | - | - | - | - | - |
| | | | Rh (g/L) | - | - | - | - | - | - |
| Upper catalyst layer | Support Particle 1 | La-A1 composite oxide (g/L) | | 63.000 | 63.000 | 63.000 | 63.000 | 63.000 | 63.000 |
| | Support Particle 2 and catalyst metal | LaY-ACZ composite oxide (g/L) | | 35.000 | 35.000 | 35.000 | 35.000 | 35.000 | 34.684 |
| | | Fine Pd metal particle | Pd(g/L) | - | - | - | - | - | - |
| | | Fine Pd-Rh composite | Pd(g/L) | - | - | - | - | - | 0.300 |
| | | metal particle | Rh (g/L) | - | - | - | - | - | 0.016 |
| | Support Particle 3 and catalyst metal | NdLaY-ACZ composite oxide (g/L) | | 71.816 | 71.816 | 71.816 | 71.816 | 71.816 | 71.816 |
| | | Fine Rh metal particle | Rh (g/L) | 0.184 | 0.184 | 0.184 | 0.184 | 0.184 | 0.184 |

(continued)

| | | | Example C1 | Example C2 | Example C3 | Example C4 | Example C5 | Example C6 |
|---|---|---|---|---|---|---|---|---|
| Lower catalyst layer | Support Particle 1 | La-A1 composite oxide (g/L) | 40.000 | 40.000 | 40.000 | 40.000 | 40.000 | 40.000 |
| | Support Particle 2 and catalyst metal | LaY-ACZ composite oxide (g/L) | 34.684 | 9.684 | 34.684 | 49.684 | 84.684 | 10.000 |
| | | Fine Pd metal particle Pd (g/L) | - | - | - | - | - | - |
| | | Fine Pd-Rh composite metal particle Pd (g/L) | 0.300 | 0.300 | 0.300 | 0.300 | 0.300 | - |
| | | Fine Pd-Rh composite metal particle Rh (g/L) | 0.016 | 0.016 | 0.016 | 0.016 | 0.016 | - |
| | Different Support Particle 2 and catalyst metal | LaY-ACZ composite oxide (g/L) | - | - | - | - | - | - |
| | | Fine Rh metal particle Rh (g/L) | - | - | - | - | - | - |
| | Sintering inhibitor | Barium sulfate (g/L) | 5.000 | 5.000 | 5.000 | 5.000 | 5.000 | 5.000 |
| | Binder | $Al_2O_3$-based binder (g/L) | 5.000 | 5.000 | 5.000 | 5.000 | 5.000 | 5.000 |
| Substrate | | cordierite-made honeycomb substrate of 875 ml, 600 cells, and 2.0 mil | | | | | | |

[Table 14]

Table 14

| | | | | Comparative Example C1 | Comparative Example C2 | Comparative Example C3 |
|---|---|---|---|---|---|---|
| Upper catalyst layer (surface) | Catalyst metal | Fine Pd metal particle | Pd (g/L) | - | - | - |
| | | Fine Pd-Rh composite metal particle | Pd (g/L) | - | - | |
| | | | Rh (g/L) | - | - | - |
| Upper catalyst layer | Support Particle 1 | La-A1 composite oxide (g/L) | | 63.000 | 63.000 | 63.000 |
| | Support Particle 2 catalyst metal | LaY-ACZ composite oxide (g/L) | | 35.000 | 35.000 | 35.000 |
| | | Fine Pd metal particle | Pd (g/L) | - | - | - |
| | and Fine Pd-Rh composite metal particle | | Pd (g/L) | - | - | - |
| | | | Rh (g/L) | - | - | - |
| | Support Particle 3 and catalyst metal | NdLaY-ACZ composite oxide | oxide (g/L) | 71.800 | 71.800 | 71.800 |
| | | Fine Rh metal particle | Rh (g/L) | 0.200 | 0.200 | 0.200 |
| Lower catalyst layer | Support Particle 1 | La-A1 composite oxide (g/L) | | 40.000 | 40.000 | 40.000 |
| | Support Particle 2 and catalyst metal | LaY-ACZ composite oxide (g/L) | | 0.000 | 34.700 | 32.900 |
| | | Fine Pd metal particle | Pd (g/L) | - | 0.300 | 0.300 |
| | | Fine Pd-Rh composite metal particle | Pd (g/L) | - | - | - |
| | | | Rh (g/L) | - | - | - |
| | Different Support Particle 2 catalyst metal | LaY-ACZ composite oxide (g/L) | | - | - | 1.784 |
| | | and Fine Rh metal particle | Rh (g/L) | - | - | 0.016 |
| | Sintering inhibitor | Barium sulfate (g/L) | | 5.000 | 5.000 | 5.000 |
| | Binder | Al$_2$O$_3$-based binder (g/L) | | 5.000 | 5.000 | 5.000 |
| Substrate | cordierite-made honeycomb substrate of 875 ml, 600 cells, and 2.0 mil | | | | | |

In Tables 13 and 14, on in Example C1, the coating was performed by applying viscosity-adjusted lower catalyst layer slurry to a region extending from downstream end to upstream end of the substrate, over 50% of the entire length thereof (rear part of the lower catalyst layer), and with respect to Examples C2 to C6 and Comparative Examples C1 to C3, the coating was performed by applying the viscosity-adjusted lower catalyst layer slurry to a region extending from upstream end to downstream end of the substrate, over 50% of the entire length thereof (front part of the lower catalyst layer).

In addition, configurations of the exhaust gas purifying catalyst devices of Examples C1, C3 and C6 and Comparative Examples C1 to C3 are shown in Table 15 below in a simplified manner. Specifically, in Table 15, only the adding position and amount added of each of the catalyst metal and Support Particle 2 and the state of the catalyst metal are shown.

[Table 15]

Table 15

| | Adding Position of Catalyst Metal | | | | | | | | | | | | |
| --- | --- | --- | --- | --- | --- | --- | --- | --- | --- | --- | --- | --- |
| | Lower Catalyst Layer (front part 50%) | | | | Lower Catalyst Layer (rear part 50%) | | | | Upper Catalyst Layer | | | |
| | Support Particle 2 (g/L) | Pd (g/L) | Rh (g/L) | State | Support Particle 2 (g/L) | Pd (g/L) | Rh (g/L) | State | Support Particle 2 (g/L) | Pd (g/L) | Rh (g/L) | State |
| Comparative Example C1 | 0.000 | - | - | - | - | - | - | - | - | - | 0.200 | fine element particle |
| | - | - | - | - | - | - | - | - | - | - | - | - |
| Example C1 | - | - | - | - | 34.684 | 0.300 | 0.016 | fine composite particle | 35.000 | - | 0.184 | fine element particle |
| | - | - | - | - | - | - | - | - | - | - | - | - |
| Example C3 | 34.684 | 0.300 | 0.016 | fine composite particle | | | - | | 35.000 | - | 0.184 | fine element particle |
| | - | - | - | - | - | - | - | - | - | - | - | - |
| Comparative Example C2 | 34.700 | 0.300 | - | - | - | - | - | - | 35.000 | - | 0.200 | fine element particle |
| | - | - | - | - | - | - | - | - | - | - | - | - |
| Comparative Example C3 | 32.900 | 0.300 | - | physical mixing | - | - | - | - | 35.000 | - | 0.184 | fine element particle |
| | 1.784 | - | 0.016 | | - | - | - | - | - | - | - | - |
| Example C6 | 10.000 | - | - | - | - | - | - | - | 34.684 | 0.300 | 0.016 | fine composite particle |
| | - | - | - | - | - | - | - | - | - | - | 0.184 | fine element particle |

Note here that in the upper catalyst layer of Table 15, when Rh (g/L) is 0.200 or 0.184, the catalyst metal is supported not on Support Particle 2 but on Support Particle 3. In addition, in Table 15, the "front part 50%" means 50% of the entire length of the substrate extending from upstream end to lower stream end of the substrate, and the "rear part 50%" means the remaining 50%.

Furthermore, in Table 15, the "fine element particle" means a state where a fine metal particle of single element of Pd or Rh is supported on the support particle, the "fine composite particle" means a state where a fine composite metal particle of Pd and Rh is supported on the support particle, and the "physical mixing" means a state where a support particle having supported thereon a fine metal particle of single element of Pd and a support particle having supported thereon a fine metal particle of single element of Rh are mixed.

<<Evaluation 5>>

With respect to the exhaust gas purifying catalyst devices of respective working examples, after endurance test was performed, the oxygen storage amount was measured, and the Oxygen Storage Capacity (OSC) was evaluated therefrom. In addition, with respect to the exhaust gas purifying catalyst devices of respective working examples, the NOx 50% purification temperature was measured, and the catalytic activity was evaluated.

<Endurance Test>

The endurance test was performed using the same conditions and procedures as in "Endurance Test" of Evaluation 3.

<Measurement of Oxygen Storage Amount>

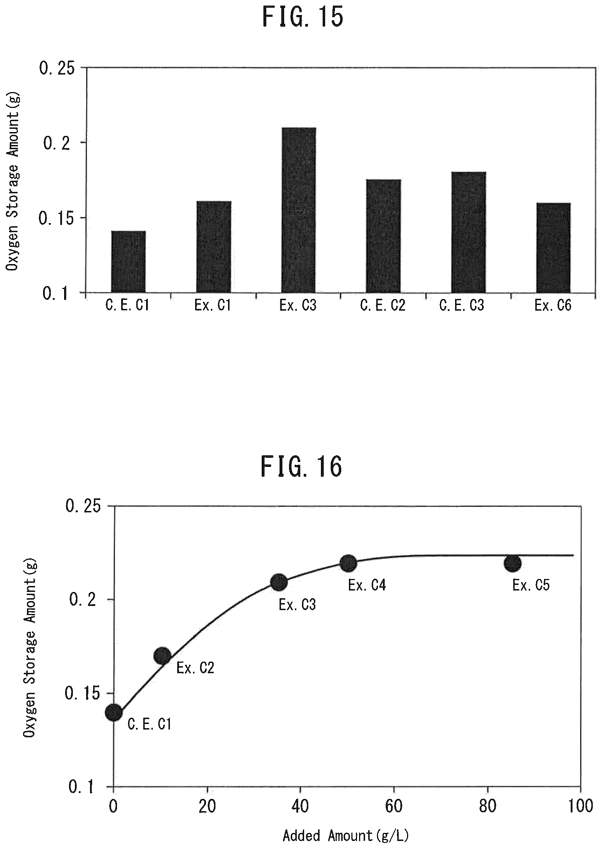

The exhaust gas purifying catalyst device of each working example after endurance test was connected to an in-line 4 cylinder engine, the air/fuel ratio was feedback controlled to attain 14.4 (weakly rich) and 15.1 (weakly lean), and from the difference between the oxygen concentration at a stoichiometric air/fuel ratio of 14.7 and the oxygen concentration of the air/fuel ratio sensor, the shortage or excess of oxygen was calculated. The results are shown in Figs. 15 and 16. Incidentally, only the amount of oxygen stored can be measured by the measurement method above.

Fig. 15 is a diagram illustrating the oxygen storage amount (g), regarding the exhaust gas purifying catalyst devices of Examples (Ex.) C1, C3 and C6 and Comparative Examples (C.E.) C1 to C3.

(Comparative Consideration for Oxygen Storage Amount of Support Particle 2 Having Supported Thereon Fine Pd-Rh composite Metal Particle, Fine Pd metal Particle, or Physical Mixture of Fine Pd Metal Particle and Fine Rh Metal Particle)

It is seen from Fig. 15 that with respect to the oxygen storage amounts of Example C3 (fine Pd-Rh composite metal particle), Comparative Example C2 (fine Pd metal particle) and Comparative Example C3 (physical mixture of fine Pd metal particle and fine Rh metal particle) each including a lower catalyst layer accounting for front part 50% of the substrate, Example C3, Comparative Example C3 and Comparative Example C2 are sequenced in descending order. Incidentally, the amount of Support Particle 2 (LaY-ACZ composite oxide) on which the catalyst metal above is supported is substantially the same among them.

This reveals that Support Particle 2 having supported thereon the fine Pd-Rh composite metal particle exhibits a higher oxygen storage amount than Support Particle 2 having supported thereon a simple substance of fine Pd metal particle or a physical mixture of fine Pd metal particle and fine Rh metal particle.

The reason for exhibiting a high oxygen storage amount is considered because the number of active sites of Pd in the fine Pd-Rh composite metal particle having a sintering-preventing effect is larger than the number of active sites of the fine Pd metal particle and in addition, because an active site for oxygen storage is present in the interface portion between the fine Pd metal particle and ceria and the number of active sites for oxygen storage in the interface portion between Pd and ceria in the fine Pd-Rh composite metal particle is larger than the number of active sites for oxygen storage in the interface portion between the fine Pd metal particle and ceria.

(Comparative Consideration for Oxygen Storage Amount in Front Part and Rear Part of Entire Length of Substrate)

It is also seen from Fig. 15 that the oxygen storage amount of Example C3 (fine Pd-Rh composite metal particle) including a lower catalyst layer accounting for front part 50% of the entire length of the substrate shows a high oxygen storage amount, compared with the oxygen storage amount of Example C1 including a lower catalyst layer accounting for rear part 50% of the entire length of the substrate.

This reveals that a catalytic reaction is likely to occur in the front part of the substrate than in the rear part of the substrate and in turn, the oxygen storage amount in the front part of the substrate is larger.

Fig. 16 is a diagram illustrating the relationship between the amount added (g/L) of LaY-ACZ composite oxide in the lower catalyst layer and the oxygen storage amount (g), regarding the exhaust gas purifying catalyst devices of Examples C2 to C5 and Comparative Example C1.

(Relationship Between Support 2: LaY-ACZ Composite Oxide and Oxygen Storage Amount)

Considering that Comparative Example C1 and Examples C2, C3, C4 and C5 are sequenced in descending order of the amount of Support Particle 2 in the lower catalyst layer, it is seen from Fig. 16 that the oxygen storage amount is high in the order above. More specifically, this reveals that as the amount of Support Particle 2 is larger, the oxygen storage amount tends to increase.

Furthermore, from the tendency of the line connecting Comparative Example C1 and Examples C2 to C5 of Fig. 16, it is understood that the change in the oxygen storage amount is small in the portion where the amount of Support Particle 2 is about 60 g/L or more.

<Measurement of NOx 50 Purification Temperature>

The exhaust gas purifying catalyst device of each working example after endurance test was connected to an in-line 4 cylinder engine (2AZ-FE engine, manufactured by TOYOTA Jidosha K.K.), an exhaust gas of a weakly rich air/fuel ratio (A/F) of 14.4 was fed to the exhaust gas purifying catalyst device, and the NOx 50% purification temperature was measured. Incidentally, a measuring apparatus of apparatus name: HORIBA MOTOR EXHAUST GAS ANALYZER and mode: MEXA-7500 was used, and the flow velocity (Ga) of the exhaust gas was 35 g/s.

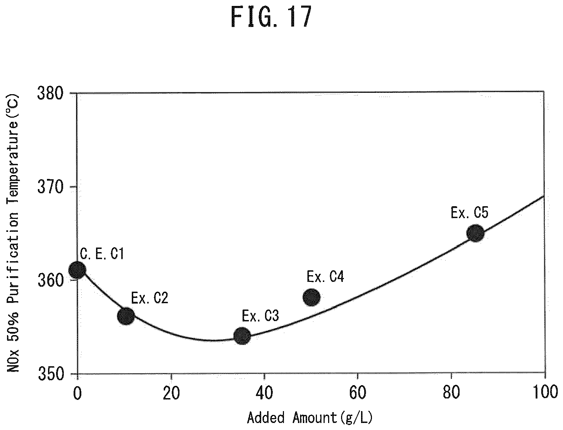

The results of the NOx 50 purification temperature measurement are shown in Fig. 17.

Fig. 17 is a diagram illustrating the relationship between the amount added (g/L) of LaY-ACZ composite oxide in the lower catalyst layer and the NOx 50% purification temperature (°C), regarding the exhaust gas purifying catalyst devices of Examples C2 to C5 and Comparative Example C1.

(Consideration for NOx 50% Purification Temperature and NOx Purification Activity of Each Working Example)

It is seen from Fig. 17 that a curve convexed downward along Comparative Example C1 and Examples C2 to C5 is present and Example C3 is plotted near the peak of the curve. In other words, Comparative Example C1, Example C2 and Example C3 are sequenced in descending order of the NOx 50% purification temperature, and Example C3, Example C4 and Example C5 are sequenced in the ascending order. Incidentally, as the NOx 50% purification temperature is lower, the NOx purification activity is higher.

With respect to Comparative Example C1, Example C2 and Example C3, as the amount of Support Particle 2 (LaY-ACZ composite oxide) in the lower catalyst layer is larger, the NOx 50% purification temperature tends to be lower. Although not intended to be bound by any theory, this is considered to be achieved because the NOx adsorption ability is enhanced resulting from an increase in the amount of Support Particle 2.

Furthermore, with respect to Example C3, Example C4 and Example C5, as the amount of Support Particle 2 in the lower catalyst layer is smaller, the NOx 50% purification temperature tends to be lower. Although not intended to be bound by any theory, this is considered to be achieved because a decrease in the amount of Support Particle 2 reduces the amount of oxygen released or facilitates diffusion of the exhaust gas and the NOx purification performance is thereby enhanced.

(Consideration for Amount of Support Particle 2 Contained in Lower Catalyst Layer)

In addition, it is seen from Fig. 17 that the NOx 50% purification temperature of Comparative Example C1 is about 363°C, and with respect to the curve convexed downward along Comparative Example C1 and Examples C2 to C5, the amount of Support Particle 2 (LaY-ACZ composite oxide) achieving a lower NOx 50% purification temperature than the NOx 50% purification temperature (about 363°C) above is understood to be more than 0 g/L and 73 g/L or less.

While preferred embodiments of the present invention have been described in detail, it will be understood by one skilled in the art that with respect to arrangements and types of the materials, reagents, production equipment, measuring equipment, etc., changes can be made without departing from Claims.

DESCRIPTION OF NUMERICAL REFERENCES

1        Rh Ion
2        Pd Ion
3        pH Adjustor
4        Composite hydroxide
5        Support particle
6        Fine composite metal particle
100      Internal combustion engine
200      First exhaust gas purifying catalyst device
210      Substrate
220      Multiple catalyst layer
221      Lower catalyst layer
222      Upper catalyst layer
300      Second exhaust gas purifying catalyst device
400      Exhaust gas

**Claims**

1.  An exhaust gas purification system comprising an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device, wherein;

    the first exhaust gas purifying catalyst device comprises a substrate, a lower catalyst layer disposed on the substrate, and an upper catalyst layer disposed on the lower catalyst layer and having a surface facing the flow path of the exhaust gas,
    the upper catalyst layer contains a fine Pd-Rh composite metal particle in an amount of 0.1 g or more and 1.2 g or less per L of the volume of the substrate, and in the upper catalyst layer, the concentration of the fine Pd-Rh composite metal particle is substantially uniform in the thickness direction;

    wherein the fine Pd-Rh composite metal particle is a fine composite metal particle containing Pd and Rh, wherein

    the average ratio of the total number of Rh atoms to the total number of Pd and Rh atoms is 0.5 at% or more and 6.5 at% or less, and
    when diffraction angles $2\theta$ indicative of the positions of diffraction peaks on the diffraction plane are specified by performing XRD analysis under the conditions that the X-ray wavelength is 1.5403 angstrom and the diffraction plane is the crystal lattice plane of Pd (111), the absolute value of the difference between the value of theoretical lattice constant B calculated from the following formula (I) related to Vegard's law and the value of actual lattice constant C calculated from the following formula (II) related to Bragg's law by using the values specified is $1.020 \times 10^{-3}$ (angstrom) or less:

$$B = -8.5459 \times 10^{-2} \times A + 3.890105 \qquad (I)$$

    [wherein A is the average ratio of the total number of Rh atoms to the total number of Pd and Rh atoms];

$$C = \lambda \times (h^2 + k^2 + l^2)^{1/2} / (2\sin\theta) \qquad (II)$$

    [wherein,

        $\lambda$ is the X-ray wavelength,
        h, k and l are the Miller indices, and
        $\theta$ is a half of the diffraction angle $2\theta$].

2.  An exhaust gas purification system comprising an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device, wherein;

the first exhaust gas purifying catalyst device comprises a substrate, a lower catalyst layer disposed on the substrate, and an upper catalyst layer disposed on the lower catalyst layer and having a surface facing the flow path of the exhaust gas,

the lower catalyst layer contains a ceria-based support particle having supported thereon a fine Pd-Rh composite metal particle in an amount of 75 g or less per L of the volume of the substrate, and in the lower catalyst layer, the concentration of the fine Pd-Rh composite metal particle is substantially uniform in the thickness direction;

wherein the fine Pd-Rh composite metal particle is a fine composite metal particle containing Pd and Rh, wherein

the average ratio of the total number of Rh atoms to the total number of Pd and Rh atoms is 0.5 at% or more and 6.5 at% or less, and

when diffraction angles $2\theta$ indicative of the positions of diffraction peaks on the diffraction plane are specified by performing XRD analysis under the conditions that the X-ray wavelength is 1.5403 angstrom and the diffraction plane is the crystal lattice plane of Pd (111), the absolute value of the difference between the value of theoretical lattice constant B calculated from the following formula (I) related to Vegard's law and the value of actual lattice constant C calculated from the following formula (II) related to Bragg's law by using the values specified is $1.020 \times 10^{-3}$ (angstrom) or less:

$$B = -8.5459 \times 10^{-2} \times A + 3.890105 \qquad (I)$$

[wherein A is the average ratio of the total number of Rh atoms to the total number of Pd and Rh atoms];

$$C = \lambda \times (h^2 + k^2 + l^2)^{1/2}/(2\sin\theta) \qquad (II)$$

[wherein,

$\lambda$ is the X-ray wavelength,
h, k and l are the Miller indices, and
$\theta$ is a half of the diffraction angle $2\theta$].

3. An exhaust gas purifying catalyst comprising a fine composite metal particle containing Pd and Rh, wherein

the average ratio of the total number of Rh atoms to the total number of Pd and Rh atoms is 0.5 at% or more and 6.5 at% or less, and

when diffraction angles $2\theta$ indicative of the positions of diffraction peaks on the diffraction plane are specified by performing XRD analysis under the conditions that the X-ray wavelength is 1.5403 angstrom and the diffraction plane is the crystal lattice plane of Pd (111), the absolute value of the difference between the value of theoretical lattice constant B calculated from the following formula (I) related to Vegard's law and the value of actual lattice constant C calculated from the following formula (II) related to Bragg's law by using the values specified is $1.020 \times 10^{-3}$ (angstrom) or less:

$$B = -8.5459 \times 10^{-2} \times A + 3.890105 \qquad (I)$$

[wherein A is the average ratio of the total number of Rh atoms to the total number of Pd and Rh atoms];

$$C = \lambda \times (h^2 + k^2 + l^2)^{1/2}/(2\sin\theta) \qquad (II)$$

[wherein,

$\lambda$ is the X-ray wavelength,
h, k and l are the Miller indices, and
$\theta$ is a half of the diffraction angle $2\theta$].

4. The exhaust gas purifying catalyst according to claim 3, further comprising a support particle, wherein the fine composite metal particle is supported on the support particle.

5. The exhaust gas purifying catalyst according to claim 4, wherein the support particle is a support particle selected from the group consisting of silica, magnesia, zirconia, ceria, alumina, titania, a solid solution thereof, and a combination thereof.

6. An exhaust gas purifying method, comprising bringing an exhaust gas containing HC, CO and NOx into contact with the exhaust gas purifying catalyst according to any one of claims 3 to 5 in a stoichiometric atmosphere, thereby purifying the exhaust gas through oxidation of HC and CO and reduction of NOx.

7. An exhaust gas purification system comprising an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device, wherein;

   the first exhaust gas purifying catalyst device comprises a substrate, a lower catalyst layer disposed on the substrate, and an upper catalyst layer disposed on the lower catalyst layer and having a surface facing the flow path of the exhaust gas,
   the upper catalyst layer contains the fine Pd-Rh composite metal particle described in claim 3 in an amount of 0.1 g or more and 1.1 g or less per L of the volume of the substrate, and in the lower and upper catalyst layers, the position having a highest concentration of the fine Pd-Rh composite metal particle is the surface of the upper catalyst layer.

8. An exhaust gas purification system comprising an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device, wherein;

   the first exhaust gas purifying catalyst device comprises a substrate, a lower catalyst layer disposed on the substrate, and an upper catalyst layer disposed on the lower catalyst layer and having a surface facing the flow path of the exhaust gas,
   the upper catalyst layer contains the fine Pd-Rh composite metal particle described in claim 3 in an amount of 0.1 g or more and 1.2 g or less per L of the volume of the substrate, and in the upper catalyst layer, the concentration of the fine Pd-Rh composite metal particle is substantially uniform in the thickness direction.

9. An exhaust gas purification system comprising an internal combustion engine for discharging an exhaust gas, a first exhaust gas purifying catalyst device for treating the exhaust gas, and a second exhaust gas purifying catalyst device for further treating the exhaust gas treated in the first exhaust gas purifying catalyst device, wherein;

   the first exhaust gas purifying catalyst device comprises a substrate, a lower catalyst layer disposed on the substrate, and an upper catalyst layer disposed on the lower catalyst layer and having a surface facing the flow path of the exhaust gas,
   the lower catalyst layer contains a ceria-based support particle having supported thereon the fine Pd-Rh composite metal particle described in claim 3 in an amount of 75 g or less per L of the volume of the substrate, and in the lower catalyst layer, the concentration of the fine Pd-Rh composite metal particle is substantially uniform in the thickness direction.

10. The exhaust gas purification system according to claim 9, wherein:

   the substrate has an upstream end serving as an inlet portion allowing the exhaust gas to enter and a downstream end serving as an outlet portion allowing the exhaust gas to exit, and
   the lower catalyst layer is formed in a length of 80% or less of the total length of the substrate over a region extending from upstream end to downstream end of the substrate.

# FIG. 1

# FIG. 2

# FIG. 3

# FIG. 4

# FIG. 5

# FIG. 6

FIG. 7

(a)

(b)

FIG. 8

# FIG. 9

400

200

230
220
210

# FIG. 10

FIG. 11

## FIG. 12

## FIG. 13

# FIG. 14

(a)

Average
Particle
Diameter

26.2 nm          50nm

(b)

Average
Particle
Diameter

38.8 nm          50nm

# FIG. 15

# FIG. 16

FIG. 17

# FIG. 18

Substrate

Lower Catalyst Layer

Upper Catalyst Layer

Surface of Upper Catalyst Layer

50μm

# FIG. 19

Europäisches
Patentamt

European
Patent Office

Office européen
des brevets

# EUROPEAN SEARCH REPORT

Application Number

EP 20 17 8997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/087836 A1 (CATALER CORP [JP]) 18 June 2015 (2015-06-18) | 3-6 | INV. B01J23/63 |
| A | * paragraphs [0006] - [0011], [0014], [0019], [0021] * * claims 1-3,5 * | 1,2,7-10 | B01D53/94 F01N3/10 B01J35/00 |
| X | JP 2010 022892 A (DAIHATSU MOTOR CO LTD; TOYOTA MOTOR CORP ET AL.) 4 February 2010 (2010-02-04) | 3-6 | |
| A | * paragraphs [0001], [0017], [0023] * | 1,2,7-10 | |
| X | US 2016/039008 A1 (HUMPHREY SIMON M [US] ET AL) 11 February 2016 (2016-02-11) | 3 | |
| A | * paragraphs [0004], [0005], [0038] * * claims 1-3 * | 1,2,4-10 | |
| E | EP 3 384 986 A1 (HEESUNG CATALYSTS CORP [KR]) 10 October 2018 (2018-10-10) * paragraphs [0001], [0003], [0017] * | 3-6 | |
| E | EP 3 354 336 A1 (CATALER CORP [JP]) 1 August 2018 (2018-08-01) * paragraphs [0001], [0009], [0020], [0029], [0030] * * table 1 * | 3-5 | TECHNICAL FIELDS SEARCHED (IPC) B01J B01D F01N |

The present search report has been drawn up for all claims

| Place of search | Date of completion of the search | Examiner |
|---|---|---|
| The Hague | 6 July 2020 | Hackenberg, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 8997

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2020

| Patent document cited in search report | | | Publication date | Patent family member(s) | | | Publication date |
|---|---|---|---|---|---|---|---|
| WO 2015087836 | A1 | | 18-06-2015 | CN | 105813733 | A | 27-07-2016 |
| | | | | EP | 3081296 | A1 | 19-10-2016 |
| | | | | JP | 6471098 | B2 | 13-02-2019 |
| | | | | JP | WO2015087836 | A1 | 16-03-2017 |
| | | | | US | 2016236181 | A1 | 18-08-2016 |
| | | | | WO | 2015087836 | A1 | 18-06-2015 |
| JP 2010022892 | A | | 04-02-2010 | NONE | | | |
| US 2016039008 | A1 | | 11-02-2016 | CN | 105163884 | A | 16-12-2015 |
| | | | | EP | 2983850 | A1 | 17-02-2016 |
| | | | | US | 2016039008 | A1 | 11-02-2016 |
| | | | | WO | 2014169235 | A1 | 16-10-2014 |
| EP 3384986 | A1 | | 10-10-2018 | CN | 108290147 | A | 17-07-2018 |
| | | | | EP | 3384986 | A1 | 10-10-2018 |
| | | | | KR | 20170064663 | A | 12-06-2017 |
| | | | | US | 2018361361 | A1 | 20-12-2018 |
| | | | | WO | 2017095158 | A1 | 08-06-2017 |
| EP 3354336 | A1 | | 01-08-2018 | CN | 108290141 | A | 17-07-2018 |
| | | | | EP | 3354336 | A1 | 01-08-2018 |
| | | | | JP | 6415738 | B2 | 31-10-2018 |
| | | | | JP | WO2017051894 | A1 | 09-11-2017 |
| | | | | US | 2018280878 | A1 | 04-10-2018 |
| | | | | WO | 2017051894 | A1 | 30-03-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002102679 A